Europäisches Patentamt

European Patent Office

Office européen des brevets

(11) Publication number: **0 420 599 B1**

# EUROPEAN PATENT SPECIFICATION

(45) Date of publication of patent specification: **21.06.95**  (51) Int. Cl.⁶: **F02M 21/02**

(21) Application number: **90310513.8**

(22) Date of filing: **26.09.90**

(54) **Flow control system.**

(30) Priority: **29.09.89 CA 614540**
**20.04.90 US 512300**

(43) Date of publication of application:
**03.04.91 Bulletin 91/14**

(45) Publication of the grant of the patent:
**21.06.95 Bulletin 95/25**

(84) Designated Contracting States:
**AT CH DE FR GB IT LI NL SE**

(56) References cited:
| EP-A- 0 183 879 | DE-A- 2 203 036 |
| FR-A- 2 409 545 | US-A- 2 696 714 |
| US-A- 2 865 395 | US-A- 3 905 394 |
| US-A- 4 170 245 | US-A- 4 487 187 |
| US-A- 4 765 303 | US-A- 4 811 720 |
| US-A- 4 829 957 | US-E- 29 383 |

**PATENT ABSTRACTS OF JAPAN, vol. 10, no.
371 (P-526)[2428], 11th December 1986;& JP-
A-61 165 109 (SANYO ELECTRIC CO., LTD)
25-07-1986**

**PATENT ABSTRACTS OF JAPAN, vol. 9, no.
326 (M-441)[2049], 21st September 1985;& JP-
A-60 159 358 (MAZDA K.K.) 20-08-1985**

(73) Proprietor: **ORTECH CORPORATION
2395 Speakman Drive
Mississauga
Ontario L5K 1B3 (CA)**

(72) Inventor: **Carter, Stephen A.
1093 Sawgrass Crescent,
Mississauga
Ontario,
Canada L5C 3V2 (CA)**
Inventor: **Williamson, Bryan C.
2409 Gilbert Court,
Burlington
Ontario,
Canada L7P 4G4 (CA)**
Inventor: **Kozole, Karl H.
68 Cherrylawn Avenue,
Weston
Ontario,
Canada M9L 2B5 (CA)**

(74) Representative: **Jones, Michael Raymond et al
HASELTINE LAKE & CO.
Hazlitt House
28 Southampton Buildings
Chancery Lane
London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

This invention relates to the control of the flow rate of a fluid, and in particular to the control of the supply of compressible fluid fuels for internal combustion engines.

Systems for converting conventional gasoline and diesel fuelled internal combustion engines to run on compressible fluid fuels, such as natural gas and propane, have been available for some time. Under current fiscal policy, there is generally a considerable retail price advantage to using propane or natural gas as a fuel, such that, for example, taxi operators and police forces can rapidly recoup the extra cost of providing a vehicle with the capability to run on propane or natural gas. Even without advantageous tax structuring the cost of a natural gas is generally lower than that of gasoline and diesel fuels, natural gas requiring relatively minor processing before it is in a saleable form, whereas conventional liquid gasoline fuels are often produced by "cracking" and processing of other longer chain hydrocarbons. Also, spark ignition engines running on natural gas do not suffer from compression ignition or "knocking" (except at very high compression ratios and intake air temperatures on large bore engines), and thus, the need for the provision of natural gas with different characteristics, similar to octane rated gasoline, is obviated. This also removes the requirement to provide knock resisting additives, such as the lead based additives used in some gasoline. Further, the major component of natural gas is methane, a "clean" fuel, which produces substantially less carbon dioxide on burning than does conventional gasoline or diesel fuel.

Despite these advantages the use of natural gas has met with only limited acceptance. This may be linked, in part at least, to a number of areas where natural gas powered vehicles compare unfavourably with conventional gasoline fuelled vehicles. The technology for utilizing natural gas fuel in this area is not as well developed as that used in conventional gasoline fuelling systems and existing products are generally relatively expensive to produce, install and service. Also, the conversion of a gasoline engine to run on natural gas normally results in a decrease in power output and a corresponding drop in vehicle performance.

A typical gaseous fuel injection system includes a pressurized fuel storage tank, a pressure regulator for reducing the fuel from the relatively high storage pressure to a lower working pressure, a metering valve for controlling the gas supply to the engine and a gas/air mixer at the engine air intake. Some form of engine management system is also provided to control the metering valve and ensure proper engine operation.

Pressure regulators in existing gaseous fuel injection systems tend to be bulky and thus are difficult to locate in the often restricted space of a vehicle engine compartment. Accordingly, these are often suitable for use only on engines with spacious engine compartments. The bulk of existing regulators is due, in part at least, to the number of components which are present in a regulator: a fuel filter in the fuel line from the fuel storage tank; at least two regulating valve stages for reducing the pressure of the fuel as it passes through the regulator; a relief valve which opens in the event of a failure of the regulator valve to prevent high pressure fuel from passing unchecked through the regulator, and a heater to warm the regulator and compensate for the cooling effect of expanding the fluid at the regulating valve.

Regulator fuel filters must be of rugged construction, since if they become blocked they may have to withstand high pressures (up to 4000 p.s.i. for natural gas), and a failure of the filter may result in considerable damage to the regulator and other components downstream of the valve.

Existing regulator valves permit relatively low flow rates, and are prone to blocking; in some cases, two or three stage regulators must be provided to accomplish a desired pressure drop and stability. Further, increasing the flow through the regulating valve tends to lead to pressure "droop", that is, the pressure drop at the valve at high flow rates is proportionally greater than the pressure drop at lower flows, leading to difficulties in calibration.

Tests on relief valves provided in existing fuel injection systems indicate that the valves are not particularly reliable and often will not open at the intended pressure. Further, some doubt has been expressed as to the ability of existing valves to accommodate the flow rates experienced on failure of the regular valve: if a relief valve on a regulator should fail, the regulator may be destroyed, in explosive fashion, by the build-up of internal fuel pressure.

Heating of regulators is normally accomplished using the engine cooling fluid, and is particularly important in natural gas fuelled vehicles, where the drop in pressure and temperature produced by the regulator valve may result in the appearance of hydrates, a lattice of methane and water present in the fuel, which has the appearance of "spongy" ice and which will block most regulator valves.

The control of the flow of the fuel between the regulator and the engine is accomplished by the metering valve which may take the form of a plurality of injectors which are operated to provide a desired fuel flow. The volume of gaseous fuel required for fuelling an engine normally necessitates provision of a number of injectors which must be capable of supplying fuel at the desired rates for idling up to maximum power, which may be a 1:40 range.

Conventional injection systems commonly utilize "multi-point" fuel injection systems in which at least one solenoid operated injector valve is provided for each engine cylinder. Sensors measure various engine operating parameters and an engine control system equates the inputs from the sensors to a desired fuel supply which is metered by, for example, operating the injectors for timed intervals, or varying the pressure of the fuel supplied to the injectors.

In "single-point" fuel injection a metered mass of fuel is supplied to a common inlet manifold. A form of such fuel injection for use with compressible fuels such as methane and propane is disclosed in United States Patent No. 4,487,187 to Petro, entitled "Electronically Controlled Fluid Flow Regulating System". The system is provided with a metering valve including a plurality of parallel lines, each of which contains a solenoid valve, operated in response to digital signals produced by an electronic digital processor. The valve orifice sizes, and the relative flow rates through the valves, are proportional to successive powers of two, and the fuel pressure differential in the system is maintained such that critical or choked flow is maintained through the orifices.

In common with other binary valves of this form, such as the valve described in United States Patent No. RE 29,383 to Gallatin et al., the flow through the valve increases/decreases in small incremental steps, the relative size of the steps between minimum and maximum flow through the valve decreasing as the number of valves is increased. However, increasing the number of valves increases the bulk and expense of the metering device.

Further, binary systems such as those disclosed in the Petro and Gallatin et al. patents have poorest flow resolution at low flowrates, which tend to be the most critical for engine operation. Vehicle engines must operate over a wide dynamic range of fuel flows, typically around 35:1. At any point in the fuel delivery range, a fuelling system should be capable of adjusting the fuel flow by 0.25%. In, for example, a 12-bit binary valve for providing a flowrate of 4096 Standard Cubic Feet per Hour (SCFH), that is, a binary valve having twelve valves which increase in flow capacities following a binary sequence, at the lowest point of the dynamic range, the minimum increment to the next flow point represents 0.85% of that flow. Thus, such systems would not be capable of controlling the fuel flow within the desired range (0.25%), and an engine equipped with this form of binary metering valve would operate inefficiently and have difficulty in conforming with proposed emission regulations which require precise control of the fuel supply.

FR-A-2409545 discloses a system for metering the flow of a fluid. It mentions in particular metering fuel for a gas turbine power unit. The system of FR-A-2409545 uses a plurality of on-off valves connected together in parallel. All but one of the valves is switched on or off according to the total flow which is required, each of these valves constituting a base load valve which provides a basic flow bit when switched on. The remaining valve is a cyclically operated valve capable of providing a flow bit which is infinitely variable over a predetermined range and is governed so as to provide the flow bit which is necessary, if any, to raise the flow from the base load valves to the required total value. The pressure difference across the valves may be maintained constant. The base load valves may be arranged so that their basic flow bits are related according to a binary progression. The cyclically operated valve may be governed in a pulse width-modulated manner. The valves may be solenoid operated and the current flowing through the winding of each valve used to provide a feedback signal indicative of the switching state of the valve. It is stated that hydraulic feedbacks can be used for monitoring the operation of the valves, instead of or in addition to the electrical feedbacks, and that each valve can be provided with a sensor which determines whether or not a flow exists in the valve. If one or more of the valves fail, and emergency operation is followed in which at least one of the base load valves or the remaining base load valves is cyclically operated to maintain the required flow.

According to a first aspect of the present invention there is provided apparatus controlling the quantity of fluid flowing into the cylinder of an internal combustion engine in a predetermined time period, the fluid flowing from a common inlet at a first pressure to a common outlet at a lower second pressure comprising:

(a) at least three fluid conducting lines having a plurality of flow capacities, said lines being connected in parallel between said common inlet and said common outlet such that the total flow from said common inlet to said common outlet is equal to the sum of the separate flows through the individual lines;

(b) a respective fluid flow control valve disposed in each line;

(c) sensors for measuring such parameters of the fluid as to enable determination of the mass flow of said measured fluid through the, or each, control valve when open;

(d) control means adapted to control selectively the opening and closing of the control valves and monitor the sensors to determine the mass flow through each control valve in accordance with the measured fluid parameters, the total fluid flow passing outwardly of said common outlet comprising a base flow component established by the control means operating at least one of the control valves as a bi-stable control valve, whereby the bi-stable control valve or selected ones of the bi-stable control valves is or are opened to provide a continuous predetermined flow, discrete step changes in the base flow component being provided by the control means opening and closing the bi-stable control valve or combinations of the bi-stable control valves, and increments of fluid flow between said discrete steps being provided by the control means operating another of the control valves as a pulsed control valve, which is opened for a fraction of the predetermined time period which is the time between consecutive combustion events, to provide a desired average flow over said time period;

wherein the control means operates at least two of the control valves as pulsing control valves.

According to a second aspect of the present invention there is provided a method for controlling the quantity of fluid flowing into the cylinder of an internal combustion engine in a predetermined time period, the fluid flowing between a common inlet at a first pressure and a common outlet at a lower second pressure through a plurality of parallel fluid conducting lines adapted to provide a plurality of flowrates therethrough and each fluid conducting line being provided with a fluid flow control valve, comprising

sensing such parameters of the fluid as to enable determination of the mass flow of said fluid through the, or each, control valve when open;

controlling selectively in dependence upon the determined mass flow the opening and closing of said control valves to control the fluid flow passing outwardly of said common outlet by providing a base flow component established by operating selected control valves as bi-stable control valves and opening the selected control valves to provide a continuous predetermined flow; and

providing discrete step changes in the base flow component by opening and closing combinations of control valves operated as bi-stable control valves,

wherein at least two of said valves are operated as pulsing valves, the remaining valves being operated as bi-stable valves, and wherein the method further comprises:

providing increments of fluid flow between said discrete steps by opening at least one of said pulsing valves for a fraction of the predetermined time period which is the time between consecutive combustion events, to provide a desired average flow over said predetermined time period.

These and other aspects of the present invention will now be described, by way of example, with reference to the accompanying drawings, in which:

Figure 1 is a block diagram of a vehicle engine provided with a fuel supply system in accordance with a preferred embodiment of the present invention;

Figure 2 is a block diagram of a fuel pressure regulator of the fuel supply of Figure 1;

Figure 3 is a block view of the controller of the supply system of Figure 1;

Figure 4 is a block diagram of a fuel metering valve of the fuel supply system of Figure 1;

Figure 5a is a top plan view of the fuel metering valve of the fuel supply system of Figure 1;

Figure 5b is a side elevational view of the fuel metering valve;

Figure 5c is an end elevational view of the fuel metering valve;

Figure 5d is a pictorial view showing the top side of the metering valve electronic control board;

Figure 6 is a sectional view on line 6-6 of Figure 5a;

Figure 7a is a top plan view of the valve block of the fuel metering valve showing the hidden detail of the inlet manifolding;

Figure 7b is a top plan view of the valve block of the fuel metering valve showing the hidden detail of the outlet manifolding;

Figure 7c is a top plan view of the valve block of the fuel metering valve showing the hidden detail of the coolant manifolding;

Figure 7d is a sectional view on line 7d-7d of Figure 7a.

Figure 8 is a sectional view of an engine air intake showing one example of an air/fuel mixer for use with the fuel supply system of Figure 1;

Figure 9 is a sectional view of an engine air intake showing a further example of an air/fuel mixer, in the form of a nozzle, for use with the fuel supply system of Figure 1; and

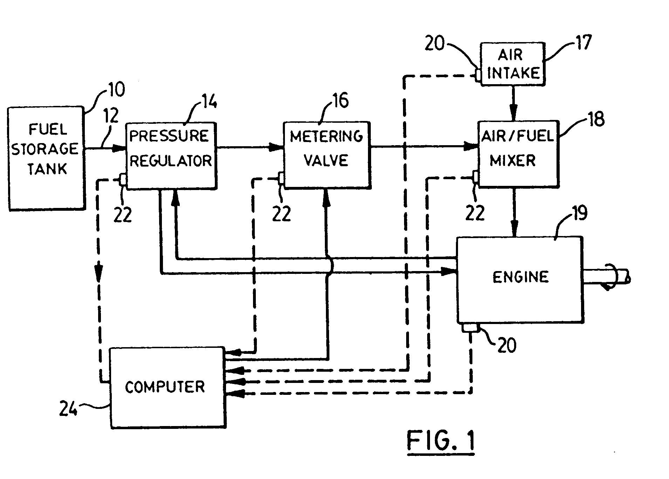

Reference is first made to Figure 1 of the drawings, which is a block diagram of the system of a preferred embodiment of the present invention. In this system, the fuel is stored under pressure in a fuel storage tank 10, the pressure varying with the type of fuel, for example natural gas being typically stored at around 3000 psi and propane at less than 312 psi, the amount of fuel in the tank 10 and the temperature of the fuel.

From the storage tank 10, a fuel line 12 leads to a fuel pressure regulator 14, where the pressure of the stored fuel is reduced to a pressure suitable for metering, and also to ensure that the fuel is in the gas phase for metering. From the regulator 14, the fuel passes through a metering device or valve 16, which supplies fuel to an air/fuel mixer 18, typically downstream of the engine air intake 17, where the fuel mixes with intake air and is drawn into the engine 19.

The metering valve 16 supplies fuel in accordance with the fuel demands of the engine 19, which are determined from various sensors 20 for detecting engine operating parameters, and various further sensors 22 which detect parameters of the fuel and operating parameters of the metering valve 16. The readings obtained by the sensors 20, 22 are fed into a system controlling computer 24, which is programmed to operate the metering valve 16 in accordance with the engine fuel requirements, as determined by manipulation of the sensor readings.

The fuel storage tank 10 and the fuel lines 12 are conventional, and as mentioned above, they supply fuel to the pressure regulator 14.

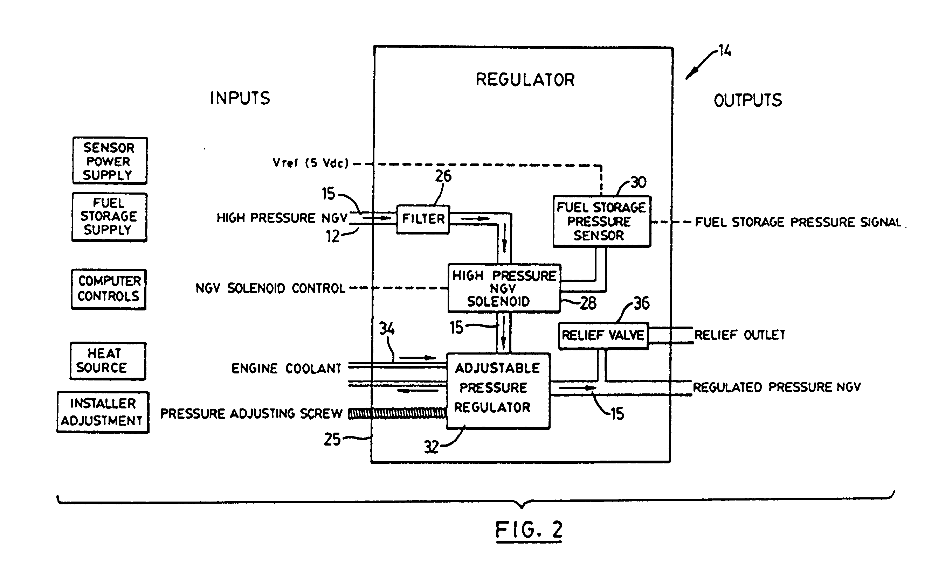

Figure 2 is a block diagram indicating the main components of the regulator 14, and the path of fuel therethrough (indicated by arrows 15). The fuel line 12 is attached to the regulator by means of a conventional inlet fitting. The fuel is then passed through a filter 26 to remove any particulate matter from the fuel. Downstream of the filter 26 is a high pressure shut-off solenoid 28, which is used to shut off the fuel supply when the engine is turned off.

The pressure of the fuel is a function of the amount of fuel in the fuel storage tank 10, and also of the fuel temperature. Thus, by measuring the fuel temperature and pressure, the amount of fuel in the tank can be determined. A high pressure sensor 30 is provided in the regulator for this purpose, downstream of the shut-off solenoid 28. A signal from the sensor 30 is supplied to the system computer 24 which is programmed to combine the pressure reading with the reading from a temperature sensor (not shown) to provide a fuel level indication.

Downstream of the solenoid 28, the high pressure fuel passes through an adjustable pressure regulator valve 32 which is adjusted to lower the pressure of the fuel to a desired level, for example, natural gas stored at 3000 psi may be reduced to a pressure of 100 psi.

The sudden expansion of the fuel results in a corresponding drop in fuel temperature. Particularly when using gaseous fuel, it is desirable to maintain the fuel temperature fairly close to ambient to maintain its state and maximize its energy density: with propane, a sufficiently low temperature may result in the propane returning to the liquid phase; and with natural gas less dramatic drops in temperature may result in the formation of "hydrates", a spongy, ice-like material formed by water present in the fuel freezing and forming a lattice with fuel molecules which will obstruct and block the flow of fuel. This cooling is overcome by heating the block, in this example by passing engine cooling fluid through a passage 34 in the regulator block.

In the event of a failure of the regulator valve 32, possibly combined with the failure of the solenoid 28, the high pressure of, for example, stored natural gas could result in the explosive destruction of the regulator. In order to minimize this possibility, a pressure relief valve 36 is provided downstream of the regulator 32, to allow for the release of pressure above a predetermined limit, before damage to the regulator 14 and metering valve 16 occurs.

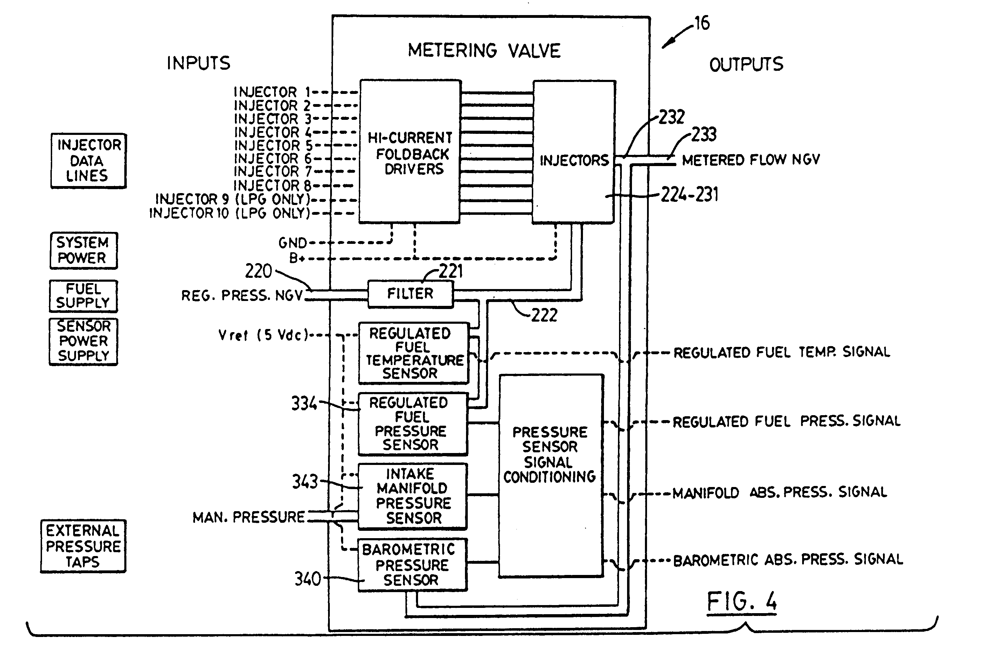

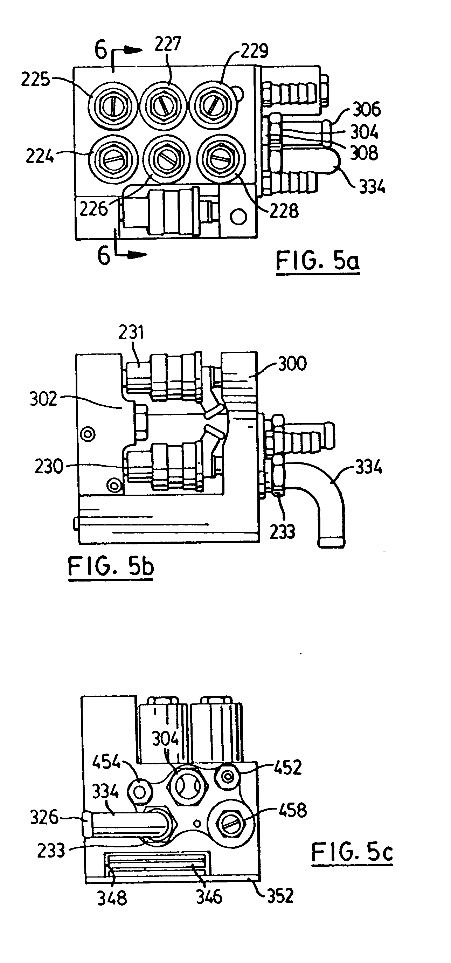

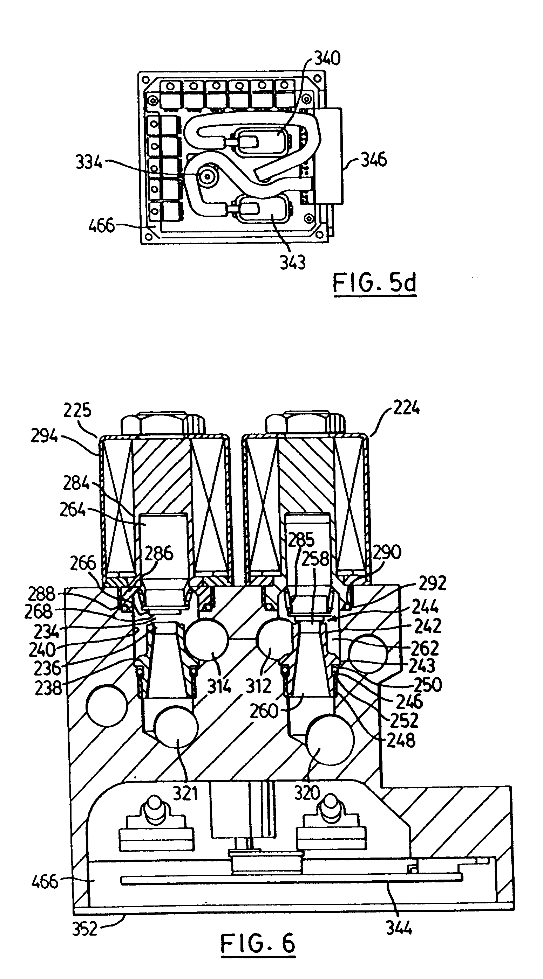

From the regulator 32, the fuel, now at a suitable pressure for metering, passes through conduits to the metering valve 16, illustrated in block diagram form in Figure 4 of the drawings, and further in Figures 5-7 of the drawings, reference being made first to Figure 4. The regulated fuel passes from the regulator through an inlet 220 provided with a filter 221 into an inlet manifold 222. The manifold communicates with, in this example, eight bi-stable fuel injectors and leads to an outlet 233 linked to the air/fuel mixer. Various sensors and control circuitry are illustrated in Figure 4 and will be described hereinbelow following a physical description of the metering valve and its various elements.

For each description, Figure 5a is designated a top plan view, and Figures 5b and 5c represent front and side elevations of the metering valve. Further, the term longitudinal, when used herein with reference to the valve body, indicates a direction perpendicular to the section line 6-6 of Figure 5A, while the term transverse indicates a direction parallel to the section line.

As mentioned above with reference to Figure 4, the fuel passes through the inlet 220 provided with a filter into a main inlet manifold 222 and communicates with eight bi-stable fuel flow control valves on 224-231 with orifices of various sizes. Six "high-flow" injectors 224-229 are mounted in the same plane, and two "low-flow" or pulsing injectors 230, 231 are mounted parallel to one another perpendicular to the other injectors, between mounting posts 300, 302. A common outlet manifold 232 communicates with the outlets of the injectors and leads to a valve outlet 233. (Fig. 4).

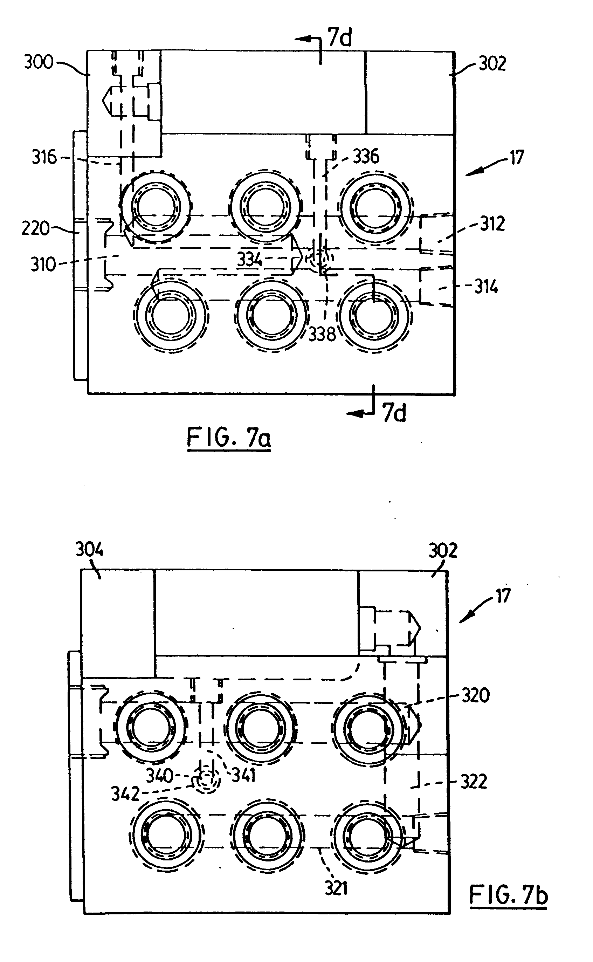

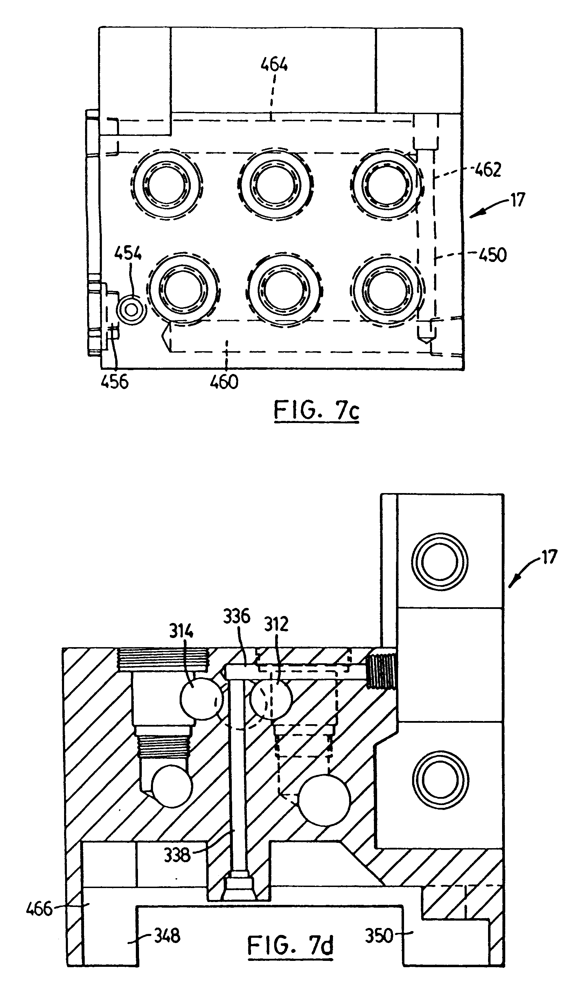

The inlet manifolding is arranged such that all injector orifices operate at substantially the same stagnation pressure, regardless of which combination of orifices is flowing. Further, the outlet manifolding is arranged such that all orifices operate at a back pressure low enough to assure that each injector orifice remains sonic, regardless of which combination of orifices is flowing. In this description, the term sonic is used to indicate choked flow in the orifice, or that the pressure differential across the orifice is such that variations in downstream pressure do not affect the flow rate through the orifice. The manifolding will be described with reference primarily to Figures 7a-7d of the drawings, the description of the inlet manifolding being followed by a description of the injector configuration, as shown in Figure 6 of the drawings and, subsequently, by a description of the outlet manifolding.

Figures 7a-7b illustrate the metering valve block 17, and each one of the Figures illustrates a different aspect of the valve body manifolding. Reference is first made to Figure 7a, which illustrates the inlet manifolding.

The inlet 220 is located in an end face of the valve body. An inlet fitting 304 (Figure 5a) is provided and comprises a hose connector portion 306, for fitting within the connecting hose (not shown) leading downstream from the regulator. The lower portion of the fitting 304 engages within a collar 308 that extends from the valve body and accommodates a filter (not shown). Extending from the collar 308 and into the valve body is a cylindrical longitudinal bore 310, which intersects two parallel longitudinal bores 312, 314 extending from the other end of the valve body. These bores 312, 314 intersect the upright bores provided for accommodating the six high-flow injectors 224-229. A transverse bore 316 intersects the inlet bore 310 to supply fuel to the low-flow injectors 230, 231, and is in communication with an upright inlet bore in communication with injector inlets at the top end of the injectors 230, 231, in the mounting post 300.

For the low-flow injectors it is also possible to extend the inlet bore to provide traps for the collection of impurities in the fuel, this being particularly useful for use in propane metering, propane often containing an oily/powdery residue that might otherwise block the orifices.

As is evident from the Figures, and the inlet manifolding configuration, the gas feed location differs between the low-flow and high-flow injectors, i.e., the low-flow injectors utilize top feed whereas the high-flow injectors utilize bottom feed. Figure 6 is an enlarged sectional view through a portion of the metering valve and illustrates details of two high-flow injectors (mountings for the low-flow injectors not shown). The injector 224 illustrated in the right hand side of Figure 6 is shown closed, and the injector 225 shown on the left hand side of the Figure is shown in the open position, providing a flow path 234 for fluid from the inlet manifold 222 or bore 314 through the injector orifice 236, to the outlet manifold 233 (Fig. 4). The orifice 236 is formed in a non-magnetic insert 238 which is fitted into a larger opening 240 in the body of the metering valve or alternatively as a permanent part of a unit injector. However, providing a separate insert allows each injector to be constructed from standard parts, differing only in the insert, or more particularly in the orifice size in the insert.

The insert 238 includes a substantially cylindrical upper portion 242, with a flange 243 formed at the base thereof, sized for a snug fit within the opening 240 and which engages an inward step of the opening. The orifice 236 is located in the centre of the upper portion 242, surrounded by a raised lip 244 which extends beyond the planar upper surface of the portion 242.

Directly below the flange 243 is a portion 246 of slightly smaller diameter than the opening 240, and below this portion is a portion 248 of diameter substantially corresponding to the opening 240, which creates an annular space 250 between the insert and the wall of the opening. A resilient O-ring 252 is located in the space 250.

The orifice extends through the insert and is preferably of the converging diverging type, having a short cylindrical portion 258 and a frusto-conical portion 260 which opens into the outlet manifold. With an orifice of this form, the pressure differential necessary to provide sonic flow through the orifice may be as low as 15%, whereas for a sharp-edged orifice the pressure differential may have to be as high as 53%.

To provide an immediately available reservoir of fuel when the injector opens, the upper portion 242 of the insert is located in a chamber 262 formed in the valve body, which provides, surrounding the orifice opening, a space which one of the bores 312, 314 intersects. The upper portion of each chamber accommodates a lower portion of a magnetic injector plunger 264, which is movable to open and close the orifice. The lower end face 266 of the plunger is provided with a resilient washer seal 268 to form a seal with the raised lip 244 of the insert when the injector is closed. Alternatively, metal to metal sealing may be used. A non-magnetic injector core tube 284 slidably receives the plunger 264, the tube including a seating portion 286 which sits in an enlarged portion 288 of the chamber 262, the seating portion 286 itself forming an upper wall of the fuel receiving part of the chamber 262. The seating portion 286 is substantially annular and includes a circumferential groove 290 having a sloping base, to provide a space between the seating portion 286 and the valve body for accommodating a resilient O-ring 292. A compression spring 285 is mounted on the plunger 264 and seats against the core tube creating a force which causes the plunger to seal against the orifice.

The upper portion of the core tube fits within a magnetic coil case 294 adapted to accommodate the injector coil. The case is mounted on an upper surface of the core tube seating portion and the valve body.

As mentioned above, the low-flow injectors in this example of a metering valve utilize top flow and are, in fact, conventional gasoline injectors, such as a Lucas type FJ12.

Below the high-flow injectors are longitudinal bores 320, 321 for receiving the gas after it has passed through the injectors. Three of the injectors communicate with a main outlet bore 320 (see Figure 7b) while the other three communicate with a smaller diameter bore 321 that is linked to the main outlet bore 320 by a transverse bore 322 (Fig. 7b). The transverse bore 322 also intersects the outlets of the low-flow injectors in the post 302. The main outlet bore 320 extends to the end of the valve body and accommodates an outlet fitting 334, which includes a hose connector 326 (see Figure 5c).

For ease of construction, the valve body is formed by drilling a solid block. The various bores are formed by drilling the block, the open ends of the bores being sealed by plugs.

The particular valve illustrated is intended for use in metering both natural gas and propane, though for a typical propane application it is likely that the valve would be provided with a greater number of injectors and the injectors would be provided with orifice inserts having larger area orifices (the propane is at lower pressure and, therefore, has a greater volume). In both natural gas and propane applications it is desired to keep the fuel from cooling to the degree that hydrates will form in the fuel or that the fuel will return to the liquid state, as discussed above. To minimize this possibility, the valve body is provided with a passage 450 (Figure 7c) for conveying a heating fluid, typically the engine cooling fluid, in a manner similar to the regulator. The passage extends around the six high-flow injector bores. The passage begins at an inlet 452 (Figure 5c) provided with a suitable inlet fitting which is received by a short, cylindrical longitudinal bore which intersects an upright bore 454 which leads to a solenoid chamber 456. A solenoid 458 (Figure 5c) is mounted on the end of the valve block and is operated to control the flow of fluid through the passageway, which is formed by three intersecting bores 460, 462, 464.

The lower portion of the block is provided with a recess 466 (Fig. 7d) which accommodates various sensors and the power transistor circuitry necessary to operate the injectors. Three pressure sensors are provided in the valve body: an outlet pressure sensor 340 (Figures 5d and 7b) which measures the pressure of the fuel downstream of the injectors by means of a plugged transverse bore 341 which intersects the main outlet bore 320 and which communicates with the sensor 340, mounted through an upright bore 342 which extends from the recess; an inlet or regulated pressure sensor 334 (Figures 5d, 7a and 7b) located in an upright bore 338 which communicates with a transverse bore 336, which intersects an inlet bore 312 (Figure 7d); and an intake manifold absolute pressure (MAP) sensor 343 which measures the pressure in the engine intake manifold via a vacuum hose. By recording the pressure sensed by the outlet pressure sensor before starting the engine it is also possible to obtain a reading for barometric pressure. A regulated fuel temperature sensor may also be provided (Figure 4).

As is seen most clearly in Figure 7d, the inlet pressure sensor transverse bore 336 just "nicks" the inlet bore 312 and the communicating opening between bores is located in an upper wall of the bore 312. This is intended to minimize the ingress of any dirt or impurities in the fuel into the pressure sensor manifolding. The outlet pressure sensor manifolding is similarly arranged.

A temperature sensor may also be provided for measuring the temperature of the fuel in the outlet bore from the low-flow injectors.

The sensors are all connected to a metering valve electronic control board 344 (Figure 6) carrying the power transistor circuitry which operates the injectors. During operation of the injectors, the circuitry generates heat which is dissipated through the valve body. Figure 4 includes a representation of the various sensors and the associated circuitry. An external connector 346 (Figure 5d) is provided at one end of the board 344 and extends through an opening 348 in the recess wall 350.

The open end of the recess may be covered with a rectangular cover 352 which is attached to the valve body using fastening screws.

As mentioned above, the system control computer selectively operates the injectors to provide a desired fuel flow to the engine. The control system includes sensors to detect various engine parameters and the fuel condition, and thus determine the fuelling needs of the engine. Various other operating parameters of the system and the engine ancillaries are also determined, and are utilized to provide accurate control of the metering valve and thus accurate fuelling of the engine. A description of the control system and the various associated sensors, will follow hereinafter.

The variation in fuel flow is provided by opening selected ones of the high-flow injectors to provide a base flow component, and preferably also by opening at least some of the low-flow injectors for predetermined timed intervals, or by "pulsing" the low-flow injectors.

The orifice sizes of the injectors are selected to provide a suitable series of flow areas which can be manipulated to provide accurate fuelling over a wide dynamic range, typically 1:40 or 1:35. The orifice sizing, or more precisely the different mass flows of fuel through each injector orifice, requires careful selection in order to minimize the number of injectors required, and reduce the number of injector closings occurring.

Sonic mass flow through an orifice ice is:

$$Q(actual) = C.A.P.\sqrt{\frac{g.k}{R.T.}\left(\frac{2}{(k+1)}\right)}^{(k+1)/(k-1)} \qquad (1)$$

Where

C = orifice discharge coefficient
A = orifice area
P = absolute supply stagnation pressure
g = a dimensional constant
k = specific heat ratio of the fluid (temp. dependant)
T = stagnation temperature of gas just before the orifice
R = specific gas constant

C, A, g are constant for each orifice, the combined effects of A and C being determined by testing each individual orifice during assembly of the metering valve, while P and T are determined by sensors to provide the actual flowrate for each orifice and k and R may be assumed for the known gas or be more accurately estimated from sensor data. For simplicity, the following description of the orifice flowrate sequences is in respect of conditions of constant temperature and pressure.

Each metering orifice $M_o$, $M_1$, $M_2$, $M_3$ and $M_n$ provides a respective gas flow $Q_o$, $Q_1$, $Q_2$, $Q_3$ and $Q_n$.

In one ideal sequence, the orifice sizes are selected such that the mass flow follows the sequence:

$$
\begin{aligned}
Q_0 &= 2^\cdot Q_0 &&= 1 \times Q_0 \\
Q_1 &= 2^\cdot Q_0 &&= 1 \times Q_0 \\
Q_2 &= 2^1 Q_0 &&= 2 \times Q_0 \\
Q_3 &= 2^2 Q_0 &&= 4 \times Q_0 \\
&\phantom{=}\;\vdots \\
Q_{n-1} &= 2^{n-2} Q_0 \\
Q_n &= 2^{n-1} Q_0
\end{aligned}
$$

Note: in a non-ideal valve the mass flows for the first two units ($Q_o$ and $Q_1$) would each need to have a flowrate somewhat greater than $1 \times Q_o$ (ideal).

In this sequence it will be noted that the flowrates, apart from the first two, vary according to natural binary.

In a further ideal sequence, the orifice sizes are selected such that the mass flow follows the sequence:

$$Q_0 = 2^0 Q_0 = 1 \times Q_0$$
$$Q_1 = 2^0 Q_0 = 1 \times Q_0$$
$$Q_2 = 2^1 Q_0 = 2 \times Q_0$$
$$Q_3 = 2^2 Q_0 = 4 \times Q_0$$
$$\vdots$$
$$Q_{n-1} = 2^{n-2} Q_0$$
$$Q_n = 2^{n-2} Q_0$$

Note: in a non-ideal valve the mass flows for the first two units ($Q_0$ and $Q_1$) would each need to have a flowrate somewhat greater than $1 \times Q_0$ (ideal).

It will be noted that the flowrates, apart from the first two, and the last flowrate, which is equal to second last flowrate, vary according to natural binary.

In the preferred ideal sequence, the orifice sizes are selected such that the mass flow follows the sequence.

$$Q_0 = 2^0 Q_0 = 1 \times Q_0$$
$$Q_1 = 2^0 Q_0 = 1 \times Q_0$$
$$Q_2 = 2^1 Q_0 = 2 \times Q_0$$
$$Q_3 = 2^2 Q_0 = 4 \times Q_0$$
$$\vdots$$
$$Q_{n-3} = 2^{n-2} Q_0$$
$$Q_{n-2} = 2^{n-3} Q_0$$

$$Q_{n-1} = (Q_{n-3}) + (Q_{n-2}) = 2^{n-4} Q_0 + 2^{n-3} Q_0 = (2^{n-4} + 2^{n-3}) Q_0$$
$$Q_n = (Q_{n-3}) + (Q_{n-2}) = 2^{n-4} Q_0 + 2^{n-3} Q_0 = (2^{n-4} + 2^{n-3}) Q_0$$

Note: in a non-ideal valve the mass flows for the first two units ($Q_0$ and $Q_1$) would each need to have a flowrate somewhat greater than $1 \times Q_0$ (ideal).

It will be noted that the flowrates, apart from the first two, and the last two flowrates which are equal and also the sum of the third and fourth last flowrates, vary according to natural binary.

As the sequences are similar, apart from the last two orifice flow rates, each will be referred to by reference to the last two "units" of flow, that is, last two units use natural binary (LNB), last two units have equal output (L2E), and last two units equal the sum of the previous two units (L2S).

There follows tables of ideal and practical configuration with actual flowrates for orifices following such sequences, to provide a maximum flow of 3000 standard cubic feet per hour (SCFH).

| Injector Number | LNB | L2E | L2S |
|---|---|---|---|
| 1 | 0-47 | 0-63 | 0-75 |
| 2 | 0-47 | 0-63 | 0-75 |
| 3 | 94 | 125 | 150 |
| 4 | 188 | 250 | 300 |
| 5 | 375 | 500 | 600 |
| 6 | 750 | 1000 | 900 |
| 7 | 1500 | 1000 | 900 |
| Total | 3001 | 3001 | 3000 |

In preferred systems, the total flow from the first two injectors will exceed the flow from the third injector, as mentioned in the notes above. This arrangement is preferred for two reasons: only a fraction of an injector's steady state flow capability can be used when the injector is "pulsing" to provide a continuously variable output flowrate, such that some "reserve" capacity is required; and if reserve of "excess" flow exists, it can be used to compensate for both transient and steady state flow errors from all of the injectors.

The use of only a fraction of an injector's steady state flowrate requires the pulsing injector to be shut off once each metering cycle. A typical (empirically supported) pulsed injector flow model can be expressed as:

$$Q[T] = Q_s \left[ \frac{T_{on} - T_{open} + T_{close}}{T_{on} + T_{off}} \right]$$

WHERE

$Q[T]$ = Pulsing injector flow rate
$Q_s$ = Steady state injector flow rate
$T_{on}$ = Injector on time control signal duration
$T_{open}$ = Time for injector to open
$T_{close}$ = Time for injector to close
$T_{on} + T_{off}$ = Time between spark plug firings

For example, a typical injector may require 1200 $\mu$s to open and 900 $\mu$s to close. If the metering cycle were on a 6 cylinder engine running at 5200 rpm, then one cycle would last 3846 $\mu$s (i.e. the time between spark plug firings).

For such an injector the nominal minimum pulsed on time would be $T_{on} = T_{open}$, and the nominal maximum pulsed on time would be $T_{on} = T_{on} + T_{off} - T_{close}$. Under these conditions, a reasonable injector flow model predicts the minimum useable injector pulsed flow rate to be 900/3846ths (or 23.4%) of its steady state flow rate. As well, the injector's maximum predictable pulsed flow rate would be (3846 - 1200)-/3846ths (or 68.8%) of its steady flow rate.

In the following sequence, a series of injector TRUTH TABLES are provided which illustrate examples of achieving, by various valve designs, a range of fuel flows. In each case, a range of flowrates is given for the injectors which are pulsed (once per combustion event) for the length of time required to provide the required average flow rate. Examples are provided where the first two or three injectors are pulsed. In all cases, the sum of the steady state flow of the pulsing injectors is greater than the output of the next injector. Notably, the first injector is never allowed to output its full steady state output for the reason noted above where only 68.8% availability of the steady flow was available at 5200 rpm. However, all other pulsing injectors may be operated at 100% of their output, if required, by merely leaving them on all of the time.

The first TRUTH TABLE includes a column headed 'Overlap', which indicates the variation of flow at particular lines which may be obtained using the same injector or value configuration by varying the pulse width or the open time of the first injector.

**L2S4.S / Qmax=2746 / C1sg= 23**

| LINE NO | TOT FLOW min | max | #1 88 | #2 88 | #3 110 | #4 220 | #5 440 | #6 900 | #7 900 | OVER LAP | OUTPUT - % F.S. No of Injectors 7 | 6 | 5 |
|---|---|---|---|---|---|---|---|---|---|---|---|---|---|
| 1 | 0 - | 61 | 0 - 61 | | | | | | | | | | |
| 2 | 62 - | 116 | 31 - 58 | 31 -58 | | | | | | | | | |
| 3 | 117 - | 168 | 29 - 80 | 88 -88 | | | | | | | | | |
| 4 | 169 - | 171 | 59 - 61 | | 110 | | | | | .34.9% | 6% | 9% | 18% |
| 5 | 172 - | 226 | 31 - 58 | 31 -58 | 110 | | | | | | 6% | 9% | 18% |
| 6 | 227 - | 278 | 29 - 80 | 88 -88 | 110 | | | | | | 8% | 12% | 24% |
| 7 | 279 - | 281 | 59 - 61 | | | 220 | | | | 21.1% | 10% | 15% | 29% |
| 8 | 282 - | 336 | 31 - 58 | 31 -58 | | 220 | | | | | 10% | 15% | 30% |
| 9 | 337 - | 388 | 29 - 80 | 88 -88 | | 220 | | | | | 12% | 18% | 36% |
| 10 | 389 - | 391 | 59 - 61 | | 110 | 220 | | | | 15.2% | 14% | 21% | 41% |
| 11 | 392 - | 446 | 31 - 58 | 31 -58 | 110 | 220 | | | | | 14% | 21% | 41% |
| 12 | 447 - | 498 | 29 - 80 | 88 -88 | 110 | 220 | | | | | 16% | 24% | 47% |
| 13 | 499 - | 501 | 59 - 61 | | | | 440 | | | 11.8% | 18% | 27% | 53% |
| 14 | 502 - | 556 | 31 - 58 | 31 -58 | | | 440 | | | | 18% | 27% | 53% |
| 15 | 557 - | 608 | 29 - 80 | 88 -88 | | | 440 | | | | 20% | 30% | 59% |
| 16 | 609 - | 611 | 59 - 61 | | 110 | | 440 | | | 9.7% | 22% | 33% | 64% |
| 17 | 612 - | 666 | 31 - 58 | 31 -58 | 110 | | 440 | | | | 22% | 33% | 65% |
| 18 | 667 - | 718 | 29 - 80 | 88 -88 | 110 | | 440 | | | | 24% | 36% | 71% |
| 19 | 719 - | 721 | 59 - 61 | | | 220 | 440 | | | 8.2% | 26% | 39% | 76% |
| 20 | 722 - | 776 | 31 - 58 | 31 -58 | | 220 | 440 | | | | 26% | 39% | 76% |
| 21 | 777 - | 828 | 29 - 80 | 88 -88 | | 220 | 440 | | | | 28% | 42% | 82% |
| 22 | 829 - | 831 | 59 - 61 | | 110 | 220 | 440 | | | 7.1% | 30% | 45% | 88% |
| 23 | 832 - | 886 | 31 - 58 | 31 -58 | 110 | 220 | 440 | | | | 30% | 45% | |
| 24 | 887 - | 938 | 29 - 80 | 88 -88 | 110 | 220 | 440 | | | | 32% | 48% | |
| 25 | 939 - | 961 | 39 - 61 | | | | | 900 | | 4.2% | 34% | 51% | |
| 26 | 962 - | 1016 | 31 - 58 | 31 -58 | | | | 900 | | | 35% | 52% | |
| 27 | 1017 - | 1068 | 29 - 80 | 88 -88 | | | | 900 | | | 37% | 55% | |
| 28 | 1069 - | 1071 | 59 - 61 | | 110 | | | 900 | | 5.5% | 39% | 58% | |
| 29 | 1072 - | 1126 | 31 - 58 | 31 -58 | 110 | | | 900 | | | 39% | 58% | |
| 30 | 1127 - | 1178 | 29 - 80 | 88 -88 | 110 | | | 900 | | | 41% | 61% | |
| 31 | 1179 - | 1181 | 59 - 61 | | | 220 | | 900 | | 5.0% | 43% | 64% | |
| 32 | 1182 - | 1236 | 31 - 58 | 31 -58 | | 220 | | 900 | | | 43% | 64% | |
| 33 | 1237 - | 1288 | 29 - 80 | 88 -88 | | 220 | | 900 | | | 45% | 67% | |
| 34 | 1289 - | 1291 | 59 - 61 | | 110 | 220 | | 900 | | 4.6% | 47% | 70% | |
| 35 | 1292 - | 1346 | 31 - 58 | 31 -58 | 110 | 220 | | 900 | | | 47% | 70% | |
| 36 | 1347 - | 1398 | 29 - 80 | 88 -88 | 110 | 220 | | 900 | | | 49% | 73% | |
| 37 | 1399 - | 1401 | 59 - 61 | | | | 440 | 900 | | 4.2% | 51% | 76% | |
| 38 | 1402 - | 1456 | 31 - 58 | 31 -58 | | | 440 | 900 | | | 51% | 76% | |
| 39 | 1457 - | 1508 | 29 - 80 | 88 -88 | | | 440 | 900 | | | 53% | 79% | |
| 40 | 1509 - | 1511 | 59 - 61 | | 110 | | 440 | 900 | | 3.9% | 55% | 82% | |
| 41 | 1512 - | 1566 | 31 - 58 | 31 -58 | 110 | | 440 | 900 | | | 55% | 82% | |
| 42 | 1567 - | 1618 | 29 - 80 | 88 -88 | 110 | | 440 | 900 | | | 57% | 85% | |
| 43 | 1619 - | 1621 | 59 - 61 | | | 220 | 440 | 900 | | 3.6% | 59% | 88% | |
| 44 | 1622 - | 1676 | 31 - 58 | 31 -58 | | 220 | 440 | 900 | | | 59% | 88% | |
| 45 | 1677 - | 1728 | 29 - 80 | 88 -88 | | 220 | 440 | 900 | | | 61% | 91% | |
| 46 | 1729 - | 1731 | 59 - 61 | | 110 | 220 | 440 | 900 | | 3.4% | 63% | 94% | |
| 47 | 1732 - | 1786 | 31 - 58 | 31 -58 | 110 | 220 | 440 | 900 | | | 63% | 94% | |
| 48 | 1787 - | 1838 | 29 - 80 | 88 -88 | 110 | 220 | 440 | 900 | | | 65% | 97% | |
| 49 | 1839 - | 1861 | 39 - 61 | | | | | 900 | 900 | 2.1% | 67% | | |
| 50 | 1862 - | 1916 | 31 - 58 | 31 -58 | | | | 900 | 900 | | 68% | | |
| 51 | 1917 - | 1968 | 29 - 80 | 88 -88 | | | | 900 | 900 | | 70% | | |
| 52 | 1969 - | 1971 | 59 - 61 | | 110 | | | 900 | 900 | 3.0% | 72% | | |
| 53 | 1972 - | 2026 | 31 - 58 | 31 -58 | 110 | | | 900 | 900 | | 72% | | |
| 54 | 2027 - | 2078 | 29 - 80 | 88 -88 | 110 | | | 900 | 900 | | 74% | | |
| 55 | 2079 - | 2081 | 59 - 61 | | | 220 | | 900 | 900 | 2.8% | 76% | | |
| 56 | 2082 - | 2136 | 31 - 58 | 31 -58 | | 220 | | 900 | 900 | | 76% | | |
| 57 | 2137 - | 2188 | 29 - 80 | 88 -88 | | 220 | | 900 | 900 | | 78% | | |
| 58 | 2189 - | 2191 | 59 - 61 | | 110 | 220 | | 900 | 900 | 2.7% | 80% | | |
| 59 | 2192 - | 2246 | 31 - 58 | 31 -58 | 110 | 220 | | 900 | 900 | | 80% | | |
| 60 | 2247 - | 2298 | 29 - 80 | 88 -88 | 110 | 220 | | 900 | 900 | | 82% | | |
| 61 | 2299 - | 2301 | 59 - 61 | | | | 440 | 900 | 900 | 2.6% | 84% | | |
| 62 | 2302 - | 2356 | 31 - 58 | 31 -58 | | | 440 | 900 | 900 | | 84% | | |
| 63 | 2357 - | 2408 | 29 - 80 | 88 -88 | | | 440 | 900 | 900 | | 86% | | |
| 64 | 2409 - | 2411 | 59 - 61 | | 110 | | 440 | 900 | 900 | 2.4% | 88% | | |
| 65 | 2412 - | 2466 | 31 - 58 | 31 -58 | 110 | | 440 | 900 | 900 | | 88% | | |
| 66 | 2467 - | 2518 | 29 - 80 | 88 -88 | 110 | | 440 | 900 | 900 | | 90% | | |
| 67 | 2519 - | 2521 | 59 - 61 | | | 220 | 440 | 900 | 900 | 2.3% | 92% | | |
| 68 | 2522 - | 2576 | 31 - 58 | 31 -58 | | 220 | 440 | 900 | 900 | | 92% | | |
| 69 | 2577 - | 2628 | 29 - 80 | 88 -88 | | 220 | 440 | 900 | 900 | | 94% | | |
| 70 | 2629 - | 2631 | 59 - 61 | | 110 | 220 | 440 | 900 | 900 | 2.2% | 96% | | |
| 71 | 2632 - | 2686 | 31 - 58 | 31 -58 | 110 | 220 | 440 | 900 | 900 | | 96% | | |
| 72 | 2687 - | 2746 | 29 - 88 | 88 -88 | 110 | 220 | 440 | 900 | 900 | | 98% | | |

INJECTOR TRUTH TABLE: L2S CONFIGURATION, 8 INJECTORS, 3 PULSING

| LINE NO | TOTAL FLOW (SCFH) min | max | #1 59 | #2 64 | #3 64 | #4 150 | #5 300 | #6 600 | #7 900 | #8 900 |
|---|---|---|---|---|---|---|---|---|---|---|
| 1 | 0 - | 59 | 0 - 59 | | | | | | | |
| 2 | 60 - | 91 | 28 - 59 | 32 | | | | | | |
| 3 | 92 - | 123 | 28 - 59 | 64 | | | | | | |
| 4 | 124 - | 155 | 28 - 59 | 64 | 32 | | | | | |
| 5 | 156 - | 187 | 28 - 59 | 64 | 64 | | | | | |
| 6 | 188 - | 209 | 38 - 59 | | | 150 | | | | |
| 7 | 210 - | 241 | 28 - 59 | 32 | | 150 | | | | |
| 8 | 242 - | 273 | 28 - 59 | 64 | | 150 | | | | |
| 9 | 274 - | 305 | 28 - 59 | 64 | 32 | 150 | | | | |
| 10 | 306 - | 337 | 28 - 59 | 64 | 64 | 150 | | | | |
| 11 | 338 - | 359 | 38 - 59 | | | | 300 | | | |
| 12 | 360 - | 391 | 28 - 59 | 32 | | | 300 | | | |
| 13 | 392 - | 423 | 28 - 59 | 64 | | | 300 | | | |
| 14 | 424 - | 455 | 28 - 59 | 64 | 32 | | 300 | | | |
| 15 | 456 - | 487 | 28 - 59 | 64 | 64 | | 300 | | | |
| 16 | 488 - | 509 | 38 - 59 | | | 150 | 300 | | | |
| 17 | 510 - | 541 | 28 - 59 | 32 | | 150 | 300 | | | |
| 18 | 542 - | 573 | 28 - 59 | 64 | | 150 | 300 | | | |
| 19 | 574 - | 605 | 28 - 59 | 64 | 32 | 150 | 300 | | | |
| 20 | 606 - | 637 | 28 - 59 | 64 | 64 | 150 | 300 | | | |
| 21 | 638 - | 659 | 38 - 59 | | | | | 600 | | |
| 22 | 660 - | 691 | 28 - 59 | 32 | | | | 600 | | |
| 23 | 692 - | 723 | 28 - 59 | 64 | | | | 600 | | |
| 24 | 724 - | 755 | 28 - 59 | 64 | 32 | | | 600 | | |
| 25 | 756 - | 787 | 28 - 59 | 64 | 64 | | | 600 | | |
| 26 | 788 - | 809 | 38 - 59 | | | 150 | | 600 | | |
| 27 | 810 - | 841 | 28 - 59 | 32 | | 150 | | 600 | | |
| 28 | 842 - | 873 | 28 - 59 | 64 | | 150 | | 600 | | |
| 29 | 874 - | 905 | 28 - 59 | 64 | 32 | 150 | | 600 | | |
| 30 | 906 - | 937 | 28 - 59 | 64 | 64 | 150 | | 600 | | |
| 31 | 938 - | 959 | 38 - 59 | | | | | | 900 | |
| 32 | 960 - | 991 | 28 - 59 | 32 | | | | | 900 | |
| 33 | 992 - | 1023 | 28 - 59 | 64 | | | | | 900 | |
| 34 | 1024 - | 1055 | 28 - 59 | 64 | 32 | | | | 900 | |
| 35 | 1056 - | 1087 | 28 - 59 | 64 | 64 | | | | 900 | |
| 36 | 1088 - | 1109 | 38 - 59 | | | 150 | | | 900 | |
| 37 | 1110 - | 1141 | 28 - 59 | 32 | | 150 | | | 900 | |
| 38 | 1142 - | 1173 | 28 - 59 | 64 | | 150 | | | 900 | |
| 39 | 1174 - | 1205 | 28 - 59 | 64 | 32 | 150 | | | 900 | |
| 40 | 1206 - | 1237 | 28 - 59 | 64 | 64 | 150 | | | 900 | |
| 41 | 1238 - | 1259 | 38 - 59 | | | | 300 | | 900 | |
| 42 | 1260 - | 1291 | 28 - 59 | 32 | | | 300 | | 900 | |
| 43 | 1292 - | 1323 | 28 - 59 | 64 | | | 300 | | 900 | |
| 44 | 1324 - | 1355 | 28 - 59 | 64 | 32 | | 300 | | 900 | |
| 45 | 1356 - | 1387 | 28 - 59 | 64 | 64 | | 300 | | 900 | |
| 46 | 1388 - | 1409 | 38 - 59 | | | 150 | 300 | | 900 | |
| 47 | 1410 - | 1441 | 28 - 59 | 32 | | 150 | 300 | | 900 | |
| 48 | 1442 - | 1473 | 28 - 59 | 64 | | 150 | 300 | | 900 | |
| 49 | 1474 - | 1505 | 28 - 59 | 64 | 32 | 150 | 300 | | 900 | |
| 50 | 1506 - | 1537 | 28 - 59 | 64 | 64 | 150 | 300 | | 900 | |
| 51 | 1538 - | 1559 | 38 - 59 | | | | | 600 | 900 | |
| 52 | 1560 - | 1591 | 28 - 59 | 32 | | | | 600 | 900 | |
| 53 | 1592 - | 1623 | 28 - 59 | 64 | | | | 600 | 900 | |
| 54 | 1624 - | 1655 | 28 - 59 | 64 | 32 | | | 600 | 900 | |
| 55 | 1656 - | 1687 | 28 - 59 | 64 | 64 | | | 600 | 900 | |
| 56 | 1688 - | 1709 | 38 - 59 | | | 150 | | 600 | 900 | |
| 57 | 1710 - | 1741 | 28 - 59 | 32 | | 150 | | 600 | 900 | |
| 58 | 1742 - | 1773 | 28 - 59 | 64 | | 150 | | 600 | 900 | |
| 59 | 1774 - | 1805 | 28 - 59 | 64 | 32 | 150 | | 600 | 900 | |
| 60 | 1806 - | 1837 | 28 - 59 | 64 | 64 | 150 | | 600 | 900 | |
| 61 | 1838 - | 1859 | 38 - 59 | | | | | | 900 | 900 |
| 62 | 1860 - | 1891 | 28 - 59 | 32 | | | | | 900 | 900 |
| 63 | 1892 - | 1923 | 28 - 59 | 64 | | | | | 900 | 900 |
| 64 | 1924 - | 1955 | 28 - 59 | 64 | 32 | | | | 900 | 900 |
| 65 | 1956 - | 1987 | 28 - 59 | 64 | 64 | | | | 900 | 900 |
| 66 | 1988 - | 2009 | 38 - 59 | | | 150 | | | 900 | 900 |
| 67 | 2010 - | 2041 | 28 - 59 | 32 | | 150 | | | 900 | 900 |
| 68 | 2042 - | 2073 | 28 - 59 | 64 | | 150 | | | 900 | 900 |
| 69 | 2074 - | 2105 | 28 - 59 | 64 | 32 | 150 | | | 900 | 900 |
| 70 | 2106 - | 2137 | 28 - 59 | 64 | 64 | 150 | | | 900 | 900 |

INJECTOR TRUTH TABLE: ⬡L2S⬡ CONFIGURATION, 8 INJECTORS, 3 PULSING

| LINE NO | TOTAL FLOW (SCFH) min max | OUTPUT FLOW USED FROM EACH INJECTOR | | | | | | | |
|---|---|---|---|---|---|---|---|---|---|
| | | #1 59 | #2 64 | #3 64 | #4 150 | #5 300 | #6 600 | #7 900 | #8 900 |
| 71 | 2138 - 2159 | 38 - 59 | | | | 300 | | 900 | 900 |
| 72 | 2160 - 2191 | 28 - 59 | 32 | | | 300 | | 900 | 900 |
| 73 | 2192 - 2223 | 28 - 59 | 64 | | | 300 | | 900 | 900 |
| 74 | 2224 - 2255 | 28 - 59 | 64 | 32 | | 300 | | 900 | 900 |
| 75 | 2256 - 2287 | 28 - 59 | 64 | 64 | | 300 | | 900 | 900 |
| 76 | 2288 - 2309 | 38 - 59 | | | 150 | 300 | | 900 | 900 |
| 77 | 2310 - 2341 | 28 - 59 | 32 | | 150 | 300 | | 900 | 900 |
| 78 | 2342 - 2373 | 28 - 59 | 64 | | 150 | 300 | | 900 | 900 |
| 79 | 2374 - 2405 | 28 - 59 | 64 | 32 | 150 | 300 | | 900 | 900 |
| 80 | 2406 - 2437 | 28 - 59 | 64 | 64 | 150 | 300 | | 900 | 900 |
| 81 | 2438 - 2459 | 38 - 59 | | | | | 600 | 900 | 900 |
| 82 | 2460 - 2491 | 28 - 59 | 32 | | | | 600 | 900 | 900 |
| 83 | 2492 - 2523 | 28 - 59 | 64 | | | | 600 | 900 | 900 |
| 84 | 2524 - 2555 | 28 - 59 | 64 | 32 | | | 600 | 900 | 900 |
| 85 | 2556 - 2587 | 28 - 59 | 64 | 64 | | | 600 | 900 | 900 |
| 86 | 2588 - 2609 | 38 - 59 | | | 150 | | 600 | 900 | 900 |
| 87 | 2610 - 2641 | 28 - 59 | 32 | | 150 | | 600 | 900 | 900 |
| 88 | 2642 - 2673 | 28 - 59 | 64 | | 150 | | 600 | 900 | 900 |
| 89 | 2674 - 2705 | 28 - 59 | 64 | 32 | 150 | | 600 | 900 | 900 |
| 90 | 2706 - 2737 | 28 - 59 | 64 | 64 | 150 | | 600 | 900 | 900 |
| 91 | 2738 - 2759 | 38 - 59 | | | | 300 | 600 | 900 | 900 |
| 92 | 2760 - 2791 | 28 - 59 | 32 | | | 300 | 600 | 900 | 900 |
| 93 | 2792 - 2823 | 28 - 59 | 64 | | | 300 | 600 | 900 | 900 |
| 94 | 2824 - 2855 | 28 - 59 | 64 | 32 | | 300 | 600 | 900 | 900 |
| 95 | 2856 - 2887 | 28 - 59 | 64 | 64 | | 300 | 600 | 900 | 900 |
| 96 | 2888 - 2909 | 38 - 59 | | | 150 | 300 | 600 | 900 | 900 |
| 97 | 2910 - 2941 | 28 - 59 | 32 | | 150 | 300 | 600 | 900 | 900 |
| 98 | 2942 - 2973 | 28 - 59 | 64 | | 150 | 300 | 600 | 900 | 900 |
| 99 | 2974 - 3005 | 28 - 59 | 64 | 32 | 150 | 300 | 600 | 900 | 900 |
| 100 | 3006 - 3037 | 28 - 59 | 64 | 64 | 150 | 300 | 600 | 900 | 900 |

INJECTOR TRUTH TABLE: L2S CONFIGURATION, 7 INJECTORS, 2 PULSING

| LINE NO | TOTAL FLOW (SCFH) min | max | #1 90 | #2 97 | #3 150 | #4 300 | #5 600 | #6 900 | #7 900 |
|---|---|---|---|---|---|---|---|---|---|
| 1 | 0 | 90 | 0 - 90 | | | | | | |
| 2 | 91 | 138 | 43 - 90 | 48 | | | | | |
| 3 | 139 | 187 | 42 - 90 | 97 | | | | | |
| 4 | 188 | 240 | 38 - 90 | | 150 | | | | |
| 5 | 241 | 288 | 43 - 90 | 48 | 150 | | | | |
| 6 | 289 | 337 | 42 - 90 | 97 | 150 | | | | |
| 7 | 338 | 390 | 38 - 90 | | | 300 | | | |
| 8 | 391 | 438 | 43 - 90 | 48 | | 300 | | | |
| 9 | 439 | 487 | 42 - 90 | 97 | | 300 | | | |
| 10 | 488 | 540 | 38 - 90 | | 150 | 300 | | | |
| 11 | 541 | 588 | 43 - 90 | 48 | 150 | 300 | | | |
| 12 | 589 | 637 | 42 - 90 | 97 | 150 | 300 | | | |
| 13 | 638 | 690 | 38 - 90 | | | | 600 | | |
| 14 | 691 | 738 | 43 - 90 | 48 | | | 600 | | |
| 15 | 739 | 787 | 42 - 90 | 97 | | | 600 | | |
| 16 | 788 | 840 | 38 - 90 | | 150 | | 600 | | |
| 17 | 841 | 888 | 43 - 90 | 48 | 150 | | 600 | | |
| 18 | 889 | 937 | 42 - 90 | 97 | 150 | | 600 | | |
| 19 | 938 | 990 | 38 - 90 | | | | | 900 | |
| 20 | 991 | 1038 | 43 - 90 | 48 | | | | 900 | |
| 21 | 1039 | 1087 | 42 - 90 | 97 | | | | 900 | |
| 22 | 1088 | 1140 | 38 - 90 | | 150 | | | 900 | |
| 23 | 1141 | 1188 | 43 - 90 | 48 | 150 | | | 900 | |
| 24 | 1189 | 1237 | 42 - 90 | 97 | 150 | | | 900 | |
| 25 | 1238 | 1290 | 38 - 90 | | | 300 | | 900 | |
| 26 | 1291 | 1338 | 43 - 90 | 48 | | 300 | | 900 | |
| 27 | 1339 | 1387 | 42 - 90 | 97 | | 300 | | 900 | |
| 28 | 1388 | 1440 | 38 - 90 | | 150 | 300 | | 900 | |
| 29 | 1441 | 1488 | 43 - 90 | 48 | 150 | 300 | | 900 | |
| 30 | 1489 | 1537 | 42 - 90 | 97 | 150 | 300 | | 900 | |
| 31 | 1538 | 1590 | 38 - 90 | | | | 600 | 900 | |
| 32 | 1591 | 1638 | 43 - 90 | 48 | | | 600 | 900 | |
| 33 | 1639 | 1687 | 42 - 90 | 97 | | | 600 | 900 | |
| 34 | 1688 | 1740 | 38 - 90 | | 150 | | 600 | 900 | |
| 35 | 1741 | 1788 | 43 - 90 | 48 | 150 | | 600 | 900 | |
| 36 | 1789 | 1837 | 42 - 90 | 97 | 150 | | 600 | 900 | |
| 37 | 1838 | 1890 | 38 - 90 | | | | | 900 | 900 |
| 38 | 1891 | 1938 | 43 - 90 | 48 | | | | 900 | 900 |
| 39 | 1939 | 1987 | 42 - 90 | 97 | | | | 900 | 900 |
| 40 | 1988 | 2040 | 38 - 90 | | 150 | | | 900 | 900 |
| 41 | 2041 | 2088 | 43 - 90 | 48 | 150 | | | 900 | 900 |
| 42 | 2089 | 2137 | 42 - 90 | 97 | 150 | | | 900 | 900 |
| 43 | 2138 | 2190 | 38 - 90 | | | 300 | | 900 | 900 |
| 44 | 2191 | 2238 | 43 - 90 | 48 | | 300 | | 900 | 900 |
| 45 | 2239 | 2287 | 42 - 90 | 97 | | 300 | | 900 | 900 |
| 46 | 2288 | 2340 | 38 - 90 | | 150 | 300 | | 900 | 900 |
| 47 | 2341 | 2388 | 43 - 90 | 48 | 150 | 300 | | 900 | 900 |
| 48 | 2389 | 2437 | 42 - 90 | 97 | 150 | 300 | | 900 | 900 |
| 49 | 2438 | 2490 | 38 - 90 | | | | 600 | 900 | 900 |
| 50 | 2491 | 2538 | 43 - 90 | 48 | | | 600 | 900 | 900 |
| 51 | 2539 | 2587 | 42 - 90 | 97 | | | 600 | 900 | 900 |
| 52 | 2588 | 2640 | 38 - 90 | | 150 | | 600 | 900 | 900 |
| 53 | 2641 | 2688 | 43 - 90 | 48 | 150 | | 600 | 900 | 900 |
| 54 | 2689 | 2737 | 42 - 90 | 97 | 150 | | 600 | 900 | 900 |
| 55 | 2738 | 2790 | 38 - 90 | | | 300 | 600 | 900 | 900 |
| 56 | 2791 | 2838 | 43 - 90 | 48 | | 300 | 600 | 900 | 900 |
| 57 | 2839 | 2887 | 42 - 90 | 97 | | 300 | 600 | 900 | 900 |
| 58 | 2888 | 2940 | 38 - 90 | | 150 | 300 | 600 | 900 | 900 |
| 59 | 2941 | 2988 | 43 - 90 | 48 | 150 | 300 | 600 | 900 | 900 |
| 60 | 2989 | 3037 | 42 - 90 | 97 | 150 | 300 | 600 | 900 | 900 |

INJECTOR TRUTH TABLE: L2S CONFIGURATION, 8 INJECTORS, 2 PULSING

| LINE NO | TOTAL FLOW (SCFH) min | max | #1 53 | #2 58 | #3 75 | #4 150 | #5 300 | #6 600 | #7 900 | #8 900 |
|---|---|---|---|---|---|---|---|---|---|---|
| 1 | 0 - | 53 | 0 - 53 | | | | | | | |
| 2 | 54 - | 82 | 25 - 53 | 29 | | | | | | |
| 3 | 83 - | 111 | 25 - 53 | 58 | | | | | | |
| 4 | 112 - | 128 | 37 - 53 | | 75 | | | | | |
| 5 | 129 - | 157 | 25 - 53 | 29 | 75 | | | | | |
| 6 | 158 - | 186 | 25 - 53 | 58 | 75 | | | | | |
| 7 | 187 - | 203 | 37 - 53 | | | 150 | | | | |
| 8 | 204 - | 232 | 25 - 53 | 29 | | 150 | | | | |
| 9 | 233 - | 261 | 25 - 53 | 58 | | 150 | | | | |
| 10 | 262 - | 278 | 37 - 53 | | 75 | 150 | | | | |
| 11 | 279 - | 307 | 25 - 53 | 29 | 75 | 150 | | | | |
| 12 | 308 - | 336 | 25 - 53 | 58 | 75 | 150 | | | | |
| 13 | 337 - | 353 | 37 - 53 | | | | 300 | | | |
| 14 | 354 - | 382 | 25 - 53 | 29 | | | 300 | | | |
| 15 | 383 - | 411 | 25 - 53 | 58 | | | 300 | | | |
| 16 | 412 - | 428 | 37 - 53 | | 75 | | 300 | | | |
| 17 | 429 - | 457 | 25 - 53 | 29 | 75 | | 300 | | | |
| 18 | 458 - | 486 | 25 - 53 | 58 | 75 | | 300 | | | |
| 19 | 487 - | 503 | 37 - 53 | | | 150 | 300 | | | |
| 20 | 504 - | 532 | 25 - 53 | 29 | | 150 | 300 | | | |
| 21 | 533 - | 561 | 25 - 53 | 58 | | 150 | 300 | | | |
| 22 | 562 - | 578 | 37 - 53 | | 75 | 150 | 300 | | | |
| 23 | 579 - | 607 | 25 - 53 | 29 | 75 | 150 | 300 | | | |
| 24 | 608 - | 636 | 25 - 53 | 58 | 75 | 150 | 300 | | | |
| 25 | 637 - | 653 | 37 - 53 | | | | | 600 | | |
| 26 | 654 - | 682 | 25 - 53 | 29 | | | | 600 | | |
| 27 | 683 - | 711 | 25 - 53 | 58 | | | | 600 | | |
| 28 | 712 - | 728 | 37 - 53 | | 75 | | | 600 | | |
| 29 | 729 - | 757 | 25 - 53 | 29 | 75 | | | 600 | | |
| 30 | 758 - | 786 | 25 - 53 | 58 | 75 | | | 600 | | |
| 31 | 787 - | 803 | 37 - 53 | | | 150 | | 600 | | |
| 32 | 804 - | 832 | 25 - 53 | 29 | | 150 | | 600 | | |
| 33 | 833 - | 861 | 25 - 53 | 58 | | 150 | | 600 | | |
| 34 | 862 - | 878 | 37 - 53 | | 75 | 150 | | 600 | | |
| 35 | 879 - | 907 | 25 - 53 | 29 | 75 | 150 | | 600 | | |
| 36 | 908 - | 936 | 25 - 53 | 58 | 75 | 150 | | 600 | | |
| 37 | 937 - | 953 | 37 - 53 | | | | | | 900 | |
| 38 | 954 - | 982 | 25 - 53 | 29 | | | | | 900 | |
| 39 | 983 - | 1011 | 25 - 53 | 58 | | | | | 900 | |
| 40 | 1012 - | 1028 | 37 - 53 | | 75 | | | | 900 | |
| 41 | 1029 - | 1057 | 25 - 53 | 29 | 75 | | | | 900 | |
| 42 | 1058 - | 1086 | 25 - 53 | 58 | 75 | | | | 900 | |
| 43 | 1087 - | 1103 | 37 - 53 | | | 150 | | | 900 | |
| 44 | 1104 - | 1132 | 25 - 53 | 29 | | 150 | | | 900 | |
| 45 | 1133 - | 1161 | 25 - 53 | 58 | | 150 | | | 900 | |
| 46 | 1162 - | 1178 | 37 - 53 | | 75 | 150 | | | 900 | |
| 47 | 1179 - | 1207 | 25 - 53 | 29 | 75 | 150 | | | 900 | |
| 48 | 1208 - | 1236 | 25 - 53 | 58 | 75 | 150 | | | 900 | |
| 49 | 1237 - | 1253 | 37 - 53 | | | | 300 | | 900 | |
| 50 | 1254 - | 1282 | 25 - 53 | 29 | | | 300 | | 900 | |
| 51 | 1283 - | 1311 | 25 - 53 | 58 | | | 300 | | 900 | |
| 52 | 1312 - | 1328 | 37 - 53 | | 75 | | 300 | | 900 | |
| 53 | 1329 - | 1357 | 25 - 53 | 29 | 75 | | 300 | | 900 | |
| 54 | 1358 - | 1386 | 25 - 53 | 58 | 75 | | 300 | | 900 | |
| 55 | 1387 - | 1403 | 37 - 53 | | | 150 | 300 | | 900 | |
| 56 | 1404 - | 1432 | 25 - 53 | 29 | | 150 | 300 | | 900 | |
| 57 | 1433 - | 1461 | 25 - 53 | 58 | | 150 | 300 | | 900 | |
| 58 | 1462 - | 1478 | 37 - 53 | | 75 | 150 | 300 | | 900 | |
| 59 | 1479 - | 1507 | 25 - 53 | 29 | 75 | 150 | 300 | | 900 | |
| 60 | 1508 - | 1536 | 25 - 53 | 58 | 75 | 150 | 300 | | 900 | |
| 61 | 1537 - | 1553 | 37 - 53 | | | | | 600 | 900 | |
| 62 | 1554 - | 1582 | 25 - 53 | 29 | | | | 600 | 900 | |
| 63 | 1583 - | 1611 | 25 - 53 | 58 | | | | 600 | 900 | |
| 64 | 1612 - | 1628 | 37 - 53 | | 75 | | | 600 | 900 | |
| 65 | 1629 - | 1657 | 25 - 53 | 29 | 75 | | | 600 | 900 | |
| 66 | 1658 - | 1686 | 25 - 53 | 58 | 75 | | | 600 | 900 | |
| 67 | 1687 - | 1703 | 37 - 53 | | | 150 | | 600 | 900 | |
| 68 | 1704 - | 1732 | 25 - 53 | 29 | | 150 | | 600 | 900 | |
| 69 | 1733 - | 1761 | 25 - 53 | 58 | | 150 | | 600 | 900 | |
| 70 | 1762 - | 1778 | 37 - 53 | | 75 | 150 | | 600 | 900 | |

INJECTOR TRUTH TABLE: L2S CONFIGURATION, 8 INJECTORS, 2 PULSING

| LINE NO | TOTAL FLOW (SCFH) min — max | #1 53 | #2 58 | #3 75 | #4 150 | #5 300 | #6 600 | #7 900 | #8 900 |
|---|---|---|---|---|---|---|---|---|---|
| 71 | 1779 - 1807 | 25 - 53 | 29 | 75 | 150 | | 600 | 900 | |
| 72 | 1808 - 1836 | 25 - 53 | 58 | 75 | 150 | | 600 | 900 | |
| 73 | 1837 - 1853 | 37 - 53 | | | | | | 900 | 900 |
| 74 | 1854 - 1882 | 25 - 53 | 29 | | | | | 900 | 900 |
| 75 | 1883 - 1911 | 25 - 53 | 58 | | | | | 900 | 900 |
| 76 | 1912 - 1928 | 37 - 53 | | 75 | | | | 900 | 900 |
| 77 | 1929 - 1957 | 25 - 53 | 29 | 75 | | | | 900 | 900 |
| 78 | 1958 - 1986 | 25 - 53 | 58 | 75 | | | | 900 | 900 |
| 79 | 1987 - 2003 | 37 - 53 | | | 150 | | | 900 | 900 |
| 80 | 2004 - 2032 | 25 - 53 | 29 | | 150 | | | 900 | 900 |
| 81 | 2033 - 2061 | 25 - 53 | 58 | | 150 | | | 900 | 900 |
| 82 | 2062 - 2078 | 37 - 53 | | 75 | 150 | | | 900 | 900 |
| 83 | 2079 - 2107 | 25 - 53 | 29 | 75 | 150 | | | 900 | 900 |
| 84 | 2108 - 2136 | 25 - 53 | 58 | 75 | 150 | | | 900 | 900 |
| 85 | 2137 - 2153 | 37 - 53 | | | | 300 | | 900 | 900 |
| 86 | 2154 - 2182 | 25 - 53 | 29 | | | 300 | | 900 | 900 |
| 87 | 2183 - 2211 | 25 - 53 | 58 | | | 300 | | 900 | 900 |
| 88 | 2212 - 2228 | 37 - 53 | | 75 | | 300 | | 900 | 900 |
| 89 | 2229 - 2257 | 25 - 53 | 29 | 75 | | 300 | | 900 | 900 |
| 90 | 2258 - 2286 | 25 - 53 | 58 | 75 | | 300 | | 900 | 900 |
| 91 | 2287 - 2303 | 37 - 53 | | | 150 | 300 | | 900 | 900 |
| 92 | 2304 - 2332 | 25 - 53 | 29 | | 150 | 300 | | 900 | 900 |
| 93 | 2333 - 2361 | 25 - 53 | 58 | | 150 | 300 | | 900 | 900 |
| 94 | 2362 - 2378 | 37 - 53 | | 75 | 150 | 300 | | 900 | 900 |
| 95 | 2379 - 2407 | 25 - 53 | 29 | 75 | 150 | 300 | | 900 | 900 |
| 96 | 2408 - 2436 | 25 - 53 | 58 | 75 | 150 | 300 | | 900 | 900 |
| 97 | 2437 - 2453 | 37 - 53 | | | | | 600 | 900 | 900 |
| 98 | 2454 - 2482 | 25 - 53 | 29 | | | | 600 | 900 | 900 |
| 99 | 2483 - 2511 | 25 - 53 | 58 | | | | 600 | 900 | 900 |
| 100 | 2512 - 2528 | 37 - 53 | | 75 | | | 600 | 900 | 900 |
| 101 | 2529 - 2557 | 25 - 53 | 29 | 75 | | | 600 | 900 | 900 |
| 102 | 2558 - 2586 | 25 - 53 | 58 | 75 | | | 600 | 900 | 900 |
| 103 | 2587 - 2603 | 37 - 53 | | | 150 | | 600 | 900 | 900 |
| 104 | 2604 - 2632 | 25 - 53 | 29 | | 150 | | 600 | 900 | 900 |
| 105 | 2633 - 2661 | 25 - 53 | 58 | | 150 | | 600 | 900 | 900 |
| 106 | 2662 - 2678 | 37 - 53 | | 75 | 150 | | 600 | 900 | 900 |
| 107 | 2679 - 2707 | 25 - 53 | 29 | 75 | 150 | | 600 | 900 | 900 |
| 108 | 2708 - 2736 | 25 - 53 | 58 | 75 | 150 | | 600 | 900 | 900 |
| 109 | 2737 - 2753 | 37 - 53 | | | | 300 | 600 | 900 | 900 |
| 110 | 2754 - 2782 | 25 - 53 | 29 | | | 300 | 600 | 900 | 900 |
| 111 | 2783 - 2811 | 25 - 53 | 58 | | | 300 | 600 | 900 | 900 |
| 112 | 2812 - 2828 | 37 - 53 | | 75 | | 300 | 600 | 900 | 900 |
| 113 | 2829 - 2857 | 25 - 53 | 29 | 75 | | 300 | 600 | 900 | 900 |
| 114 | 2858 - 2886 | 25 - 53 | 58 | 75 | | 300 | 600 | 900 | 900 |
| 115 | 2887 - 2903 | 37 - 53 | | | 150 | 300 | 600 | 900 | 900 |
| 116 | 2904 - 2932 | 25 - 53 | 29 | | 150 | 300 | 600 | 900 | 900 |
| 117 | 2933 - 2961 | 25 - 53 | 58 | | 150 | 300 | 600 | 900 | 900 |
| 118 | 2962 - 2978 | 37 - 53 | | 75 | 150 | 300 | 600 | 900 | 900 |
| 119 | 2979 - 3007 | 25 - 53 | 29 | 75 | 150 | 300 | 600 | 900 | 900 |
| 120 | 3008 - 3036 | 25 - 53 | 58 | 75 | 150 | 300 | 600 | 900 | 900 |

INJECTOR TRUTH TABLE: L2E CONFIGURATION, 7 INJECTORS, 2 PULSING

| LINE NO | TOTAL FLOW (SCFH) min | max | #1 80 | #2 86 | #3 125 | #4 250 | #5 500 | #6 1000 | #7 1000 |
|---|---|---|---|---|---|---|---|---|---|
| 1 | 0 - | 80 | 0 - 80 | | | | | | |
| 2 | 81 - | 123 | 38 - 80 | 43 | | | | | |
| 3 | 124 - | 166 | 38 - 80 | 86 | | | | | |
| 4 | 167 - | 205 | 42 - 80 | | 125 | | | | |
| 5 | 206 - | 248 | 38 - 80 | 43 | 125 | | | | |
| 6 | 249 - | 291 | 38 - 80 | 86 | 125 | | | | |
| 7 | 292 - | 330 | 42 - 80 | | | 250 | | | |
| 8 | 331 - | 373 | 38 - 80 | 43 | | 250 | | | |
| 9 | 374 - | 416 | 38 - 80 | 86 | | 250 | | | |
| 10 | 417 - | 455 | 42 - 80 | | 125 | 250 | | | |
| 11 | 456 - | 498 | 38 - 80 | 43 | 125 | 250 | | | |
| 12 | 499 - | 541 | 38 - 80 | 86 | 125 | 250 | | | |
| 13 | 542 - | 580 | 42 - 80 | | | | 500 | | |
| 14 | 581 - | 623 | 38 - 80 | 43 | | | 500 | | |
| 15 | 624 - | 666 | 38 - 80 | 86 | | | 500 | | |
| 16 | 667 - | 705 | 42 - 80 | | 125 | | 500 | | |
| 17 | 706 - | 748 | 38 - 80 | 43 | 125 | | 500 | | |
| 18 | 749 - | 791 | 38 - 80 | 86 | 125 | | 500 | | |
| 19 | 792 - | 830 | 42 - 80 | | | 250 | 500 | | |
| 20 | 831 - | 873 | 38 - 80 | 43 | | 250 | 500 | | |
| 21 | 874 - | 916 | 38 - 80 | 86 | | 250 | 500 | | |
| 22 | 917 - | 955 | 42 - 80 | | 125 | 250 | 500 | | |
| 23 | 956 - | 998 | 38 - 80 | 43 | 125 | 250 | 500 | | |
| 24 | 999 - | 1041 | 38 - 80 | 86 | 125 | 250 | 500 | | |
| 25 | 1042 - | 1080 | 42 - 80 | | | | | 1000 | |
| 26 | 1081 - | 1123 | 38 - 80 | 43 | | | | 1000 | |
| 27 | 1124 - | 1166 | 38 - 80 | 86 | | | | 1000 | |
| 28 | 1167 - | 1205 | 42 - 80 | | 125 | | | 1000 | |
| 29 | 1206 - | 1248 | 38 - 80 | 43 | 125 | | | 1000 | |
| 30 | 1249 - | 1291 | 38 - 80 | 86 | 125 | | | 1000 | |
| 31 | 1292 - | 1330 | 42 - 80 | | | 250 | | 1000 | |
| 32 | 1331 - | 1373 | 38 - 80 | 43 | | 250 | | 1000 | |
| 33 | 1374 - | 1416 | 38 - 80 | 86 | | 250 | | 1000 | |
| 34 | 1417 - | 1455 | 42 - 80 | | 125 | 250 | | 1000 | |
| 35 | 1456 - | 1498 | 38 - 80 | 43 | 125 | 250 | | 1000 | |
| 36 | 1499 - | 1541 | 38 - 80 | 86 | 125 | 250 | | 1000 | |
| 37 | 1542 - | 1580 | 42 - 80 | | | | 500 | 1000 | |
| 38 | 1581 - | 1623 | 38 - 80 | 43 | | | 500 | 1000 | |
| 39 | 1624 - | 1666 | 38 - 80 | 86 | | | 500 | 1000 | |
| 40 | 1667 - | 1705 | 42 - 80 | | 125 | | 500 | 1000 | |
| 41 | 1706 - | 1748 | 38 - 80 | 43 | 125 | | 500 | 1000 | |
| 42 | 1749 - | 1791 | 38 - 80 | 86 | 125 | | 500 | 1000 | |
| 43 | 1792 - | 1830 | 42 - 80 | | | 250 | 500 | 1000 | |
| 44 | 1831 - | 1873 | 38 - 80 | 43 | | 250 | 500 | 1000 | |
| 45 | 1874 - | 1916 | 38 - 80 | 86 | | 250 | 500 | 1000 | |
| 46 | 1917 - | 1955 | 42 - 80 | | 125 | 250 | 500 | 1000 | |
| 47 | 1956 - | 1998 | 38 - 80 | 43 | 125 | 250 | 500 | 1000 | |
| 48 | 1999 - | 2041 | 38 - 80 | 86 | 125 | 250 | 500 | 1000 | |
| 49 | 2042 - | 2080 | 42 - 80 | | | | | 1000 | 1000 |
| 50 | 2081 - | 2123 | 38 - 80 | 43 | | | | 1000 | 1000 |
| 51 | 2124 - | 2166 | 38 - 80 | 86 | | | | 1000 | 1000 |
| 52 | 2167 - | 2205 | 42 - 80 | | 125 | | | 1000 | 1000 |
| 53 | 2206 - | 2248 | 38 - 80 | 43 | 125 | | | 1000 | 1000 |
| 54 | 2249 - | 2291 | 38 - 80 | 86 | 125 | | | 1000 | 1000 |
| 55 | 2292 - | 2330 | 42 - 80 | | | 250 | | 1000 | 1000 |
| 56 | 2331 - | 2373 | 38 - 60 | 43 | | 250 | | 1000 | 1000 |
| 57 | 2374 - | 2416 | 38 - 80 | 86 | | 250 | | 1000 | 1000 |
| 58 | 2417 - | 2455 | 42 - 80 | | 125 | 250 | | 1000 | 1000 |
| 59 | 2456 - | 2498 | 38 - 80 | 43 | 125 | 250 | | 1000 | 1000 |
| 60 | 2499 - | 2541 | 38 - 80 | 86 | 125 | 250 | | 1000 | 1000 |
| 61 | 2542 - | 2580 | 42 - 80 | | | | 500 | 1000 | 1000 |
| 62 | 2581 - | 2623 | 38 - 80 | 43 | | | 500 | 1000 | 1000 |
| 63 | 2624 - | 2666 | 38 - 80 | 86 | | | 500 | 1000 | 1000 |
| 64 | 2667 - | 2705 | 42 - 80 | | 125 | | 500 | 1000 | 1000 |
| 65 | 2706 - | 2748 | 38 - 80 | 43 | 125 | | 500 | 1000 | 1000 |
| 66 | 2749 - | 2791 | 38 - 80 | 86 | 125 | | 500 | 1000 | 1000 |
| 67 | 2792 - | 2830 | 42 - 80 | | | 250 | 500 | 1000 | 1000 |
| 68 | 2831 - | 2873 | 38 - 80 | 43 | | 250 | 500 | 1000 | 1000 |
| 69 | 2874 - | 2916 | 38 - 80 | 86 | | 250 | 500 | 1000 | 1000 |
| 70 | 2917 - | 2955 | 42 - 80 | | 125 | 250 | 500 | 1000 | 1000 |
| 71 | 2956 - | 2998 | 38 - 80 | 43 | 125 | 250 | 500 | 1000 | 1000 |
| 72 | 2999 - | 3041 | 38 - 80 | 86 | 125 | 250 | 500 | 1000 | 1000 |

INJECTOR TRUTH TABLE: [LNB] CONFIGURATION, 7 INJECTORS, 2 PULSING

| LINE NO | TOTAL FLOW (SCFH) min | max | #1 74 | #2 80 | #3 94 | #4 188 | #5 375 | #6 750 | #7 1500 |
|---|---|---|---|---|---|---|---|---|---|
| 1 | 0 | 74 | 0 - 74 | | | | | | |
| 2 | 75 | 114 | 35 - 74 | 40 | | | | | |
| 3 | 115 | 168 | 21 - 74 | | 94 | | | | |
| 4 | 169 | 208 | 35 - 74 | 40 | 94 | | | | |
| 5 | 209 | 262 | 21 - 74 | | | 188 | | | |
| 6 | 263 | 302 | 35 - 74 | 40 | | 188 | | | |
| 7 | 303 | 356 | 21 - 74 | | 94 | 188 | | | |
| 8 | 357 | 396 | 35 - 74 | 40 | 94 | 188 | | | |
| 9 | 397 | 449 | 22 - 74 | | | | 375 | | |
| 10 | 450 | 489 | 35 - 74 | 40 | | | 375 | | |
| 11 | 490 | 543 | 21 - 74 | | 94 | | 375 | | |
| 12 | 544 | 583 | 35 - 74 | 40 | 94 | | 375 | | |
| 13 | 584 | 637 | 21 - 74 | | | 188 | 375 | | |
| 14 | 638 | 677 | 35 - 74 | 40 | | 188 | 375 | | |
| 15 | 678 | 731 | 21 - 74 | | 94 | 188 | 375 | | |
| 16 | 732 | 771 | 35 - 74 | 40 | 94 | 188 | 375 | | |
| 17 | 772 | 824 | 22 - 74 | | | | | 750 | |
| 18 | 825 | 864 | 35 - 74 | 40 | | | | 750 | |
| 19 | 865 | 918 | 21 - 74 | | 94 | | | 750 | |
| 20 | 919 | 958 | 35 - 74 | 40 | 94 | | | 750 | |
| 21 | 959 | 1012 | 21 - 74 | | | 188 | | 750 | |
| 22 | 1013 | 1052 | 35 - 74 | 40 | | 188 | | 750 | |
| 23 | 1053 | 1106 | 21 - 74 | | 94 | 188 | | 750 | |
| 24 | 1107 | 1146 | 35 - 74 | 40 | 94 | 188 | | 750 | |
| 25 | 1147 | 1199 | 22 - 74 | | | | 375 | 750 | |
| 26 | 1200 | 1239 | 35 - 74 | 40 | | | 375 | 750 | |
| 27 | 1240 | 1293 | 21 - 74 | | 94 | | 375 | 750 | |
| 28 | 1294 | 1333 | 35 - 74 | 40 | 94 | | 375 | 750 | |
| 29 | 1334 | 1387 | 21 - 74 | | | 188 | 375 | 750 | |
| 30 | 1388 | 1427 | 35 - 74 | 40 | | 188 | 375 | 750 | |
| 31 | 1428 | 1481 | 21 - 74 | | 94 | 188 | 375 | 750 | |
| 32 | 1482 | 1521 | 35 - 74 | 40 | 94 | 188 | 375 | 750 | |
| 33 | 1522 | 1574 | 22 - 74 | | | | | | 1500 |
| 34 | 1575 | 1614 | 35 - 74 | 40 | | | | | 1500 |
| 35 | 1615 | 1668 | 21 - 74 | | 94 | | | | 1500 |
| 36 | 1669 | 1708 | 35 - 74 | 40 | 94 | | | | 1500 |
| 37 | 1709 | 1762 | 21 - 74 | | | 188 | | | 1500 |
| 38 | 1763 | 1802 | 35 - 74 | 40 | | 188 | | | 1500 |
| 39 | 1803 | 1856 | 21 - 74 | | 94 | 188 | | | 1500 |
| 40 | 1857 | 1896 | 35 - 74 | 40 | 94 | 188 | | | 1500 |
| 41 | 1897 | 1949 | 22 - 74 | | | | 375 | | 1500 |
| 42 | 1950 | 1989 | 35 - 74 | 40 | | | 375 | | 1500 |
| 43 | 1990 | 2043 | 21 - 74 | | 94 | | 375 | | 1500 |
| 44 | 2044 | 2083 | 35 - 74 | 40 | 94 | | 375 | | 1500 |
| 45 | 2084 | 2137 | 21 - 74 | | | 188 | 375 | | 1500 |
| 46 | 2138 | 2177 | 35 - 74 | 40 | | 188 | 375 | | 1500 |
| 47 | 2178 | 2231 | 21 - 74 | | 94 | 188 | 375 | | 1500 |
| 48 | 2232 | 2271 | 35 - 74 | 40 | 94 | 188 | 375 | | 1500 |
| 49 | 2272 | 2324 | 22 - 74 | | | | | 750 | 1500 |
| 50 | 2325 | 2364 | 35 - 74 | 40 | | | | 750 | 1500 |
| 51 | 2365 | 2418 | 21 - 74 | | 94 | | | 750 | 1500 |
| 52 | 2419 | 2458 | 35 - 74 | 40 | 94 | | | 750 | 1500 |
| 53 | 2459 | 2512 | 21 - 74 | | | 188 | | 750 | 1500 |
| 54 | 2513 | 2552 | 35 - 74 | 40 | | 188 | | 750 | 1500 |
| 55 | 2553 | 2606 | 21 - 74 | | 94 | 188 | | 750 | 1500 |
| 56 | 2607 | 2646 | 35 - 74 | 40 | 94 | 188 | | 750 | 1500 |
| 57 | 2647 | 2699 | 22 - 74 | | | | 375 | 750 | 1500 |
| 58 | 2700 | 2739 | 35 - 74 | 40 | | | 375 | 750 | 1500 |
| 59 | 2740 | 2793 | 21 - 74 | | 94 | | 375 | 750 | 1500 |
| 60 | 2794 | 2833 | 35 - 74 | 40 | 94 | | 375 | 750 | 1500 |
| 61 | 2834 | 2887 | 21 - 74 | | | 188 | 375 | 750 | 1500 |
| 62 | 2888 | 2927 | 35 - 74 | 40 | | 188 | 375 | 750 | 1500 |
| 63 | 2928 | 2981 | 21 - 74 | | 94 | 188 | 375 | 750 | 1500 |
| 64 | 2982 | 3021 | 35 - 74 | 40 | 94 | 188 | 375 | 750 | 1500 |

To accurately control the flow of fuel it is necessary to have the variables included in equation (1) above to calculate the mass flow of fuel through each orifice of the metering valve, and also to be able to predict the response times of individual injectors to "open" and "close" signals, and also the amount of fuel flowing through each orifice while the injector is changing states. These transient flowrates are affected by the operating voltage of the injector coil and the fuel pressure and temperature. The operating voltage and fuel pressure and temperature are readily obtained using appropriate sensors, while the injector coil temperature may be approximated by a control computer using fuel temperature, valve ambient temperature, injector on time, mass flowrate through the valve, and nominal heat rise and heat transfer characteristics of the injectors.

This information allows the fuel flow during the transient period to be predicted, such that the injectors are opened and closed at the correct times, and for the correct time periods.

The control system includes sensors 22a to detect the vehicle battery voltage (typically between 6 and 24 volts), as the response time of the injector will vary with the coil energizing voltage. The control system maintains the energizing current at, for example, 2 Amps., which is required to quickly open the injector and due to the low coil impedance assures that the injector will open even when the vehicle battery is operating at unusually low voltages. However, once the injector is open, the energizing current is reduced to 1/2 Amp. This feature, known as current foldback, in this example minimizes the generation of heat by the energized coil, prolongs coil life, and reduces the power consumption of the system and most importantly, reduces the time required for the magnetic field in the coil to collapse, which minimizes the injector closing period.

While injectors and orifices will be manufactured for specific orifice areas and consequently specific flowrates, there will still be small production variations in the orifice areas, and thus in the predicted flowrates, when compared to the "perfect" metering valve. To minimize fuelling errors and to avoid discontinuities in the fuel flow, each injector is tested, as mentioned above, such that the characteristics of each individual injector are known and can be introduced into the system control. The testing information may be provided in the form of a bar code, adhered to the injector or metering valve, which bar code may be read when the system is being fitted to a vehicle.

Below are flow figures for an exemplary seven injector, L2S metering valve, for producing a maximum flow of 3000 SCFH.

| Injector Number | All@ -2% | All@ Nominal | All@ +2% | Combinations | |
|---|---|---|---|---|---|
| | | | | Min/Max | Random |
| 1 | 73.5 | 75 | 76.5 | 76.5 | 73.5 |
| 2 | 73.5 | 75 | 76.5 | 73.5 | 73.5 |
| 3 | 147.0 | 150 | 153.0 | 150 | 146.0 |
| 4 | 294.0 | 300 | 306.0 | 294 | 306.0 |
| 5 | 588.9 | 600 | 612.0 | 612 | 588.0 |
| 6 | 882.0 | 900 | 918.0 | 882 | 918.0 |
| 7 | 882.0 | 900 | 918.0 | 918 | 918.0 |
| Total | 2940 | 3000 | 3060 | 3006 | 3023 |

| | Nominal | Min/Max | Random |
|---|---|---|---|
| Output of Injectors 1 + 2 + 3 | 300 | 300 | 293 |
| Output of Injector 4 | 300 | 294 | 306 |
| Error re 1 + 2 + 3 vs 4 | 0 | -2.0% | 4.4% |
| Output of Injectors 1 + 2 + 3 + 5 | 900 | 912 | 881 |
| Output of Injector 6 | 900 | 882 | 918 |
| Error re 1 + 2 + 3 + 5 vs 6 | 0 | -3.3% | 4.2% |

It may be seen that if it were simply assumed that all injectors were nominal, or "perfect" when the metering valve was increasing the flow from, for example, 900 SCFH to just over 900 SCFH, when the valve changed from using injectors 1 + 2 + 3 + 5 to using injector 6, there would possibly be an error in fuelling of 3-4%. This might not necessarily noticeably affect the performance of some engines, but for proper operation of, for example, three-way catalytic convertors, it is desirable to have the fuel supply controlled within 0.25%.

To compensate for such errors, one of the pulsing injectors may be used to bridge the gap between the two flow rates. The use of pulsing injectors further provides for greater definition of flow using a limited number of injectors. Clearly, the pulsing cannot be used to provide infinite flow definition, and to provide more accurate prediction of flow a minimum on-time is set for each injector, such that proper control of the valve is maintained and the less predictable pull-in and drop out flowrates have proportionally less effect on the total predicted flow. Typically, for the desired degree of control, a pulsing injector requires a minimum off time of 900,$\mu$s and has a pull in time of 1200,$\mu$s.

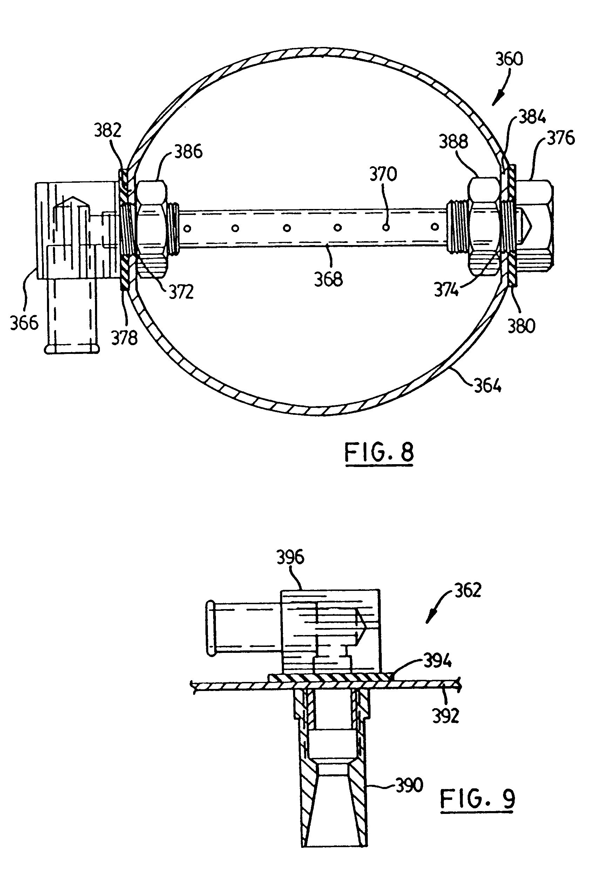

Downstream of the metering valve, the metered fuel is mixed with air before being supplied to the engine. The fuel and air are conveniently mixed in or after the engine air cleaner. A fuel mixer 360 and a fuel nozzle 362 suitable for use in this environment is illustrated in Figures 8 and 9 of the drawings. Both the fuel mixer 360 and the fuel nozzle 362 are adapted for providing dispersion of the fuel in the air stream. In this system, the fuel is supplied from the metering valve at a positive pressure, preferably at a pressure of between 1 and 2 p.s.i.

Figure 8 illustrates a mixer 360 suitable for location in the intake air duct 364 between the air cleaner and throttle plate. The mixer 360 includes a right-angle nozzle inlet 366 for connection to a hose (not shown) leading from the metering valve outlet, the inlet 366 leading into a diffuser tube 368 provided with a series of openings 370 through which the fuel diffuses into the air being drawn into the engine. The ends of the diffuser tube extend through openings 372, 374 in the intake tube 364 and are located at one end by the nozzle inlet 366, and at the other end by a diffuser tube support 376. Sealing washers 378, 380 are located between the nozzle inlet 366 and tube support 376 and flats 382, 384 formed on the exterior of the intake air duct 364, while retaining nuts 386, 388 are provided on the interior of the duct 364 to hold the tube 368 in the nozzle inlet 366 and support 376.

The nozzle 362 illustrated in Figure 9 includes a simple diffuser cone 390 fitted to a right angle nozzle inlet 396 and is suited for fitting to an air cleaner, possibly in the air cleaner lid or the inlet snorkel. The illustrated example is shown fitted to an air cleaner lid 392, a sealing washer 394 being provided between the lid 392 and the inlet 396. The cone 390 provides a cone-shaped outlet which diffuses the fuel in the intake air.

When installed in the air-cleaner lid, a nozzle is located over each throttle bore.

The air cleaner lid is the preferred location on direct mounted air cleaners as a means to minimize transient delays and to minimize the volume of "stored" combustible charge above the throttles.

To control the operation of the metering valve to provide the correct quantity of fuel to the engine requires the theoretical modelling of the fuel requirements of the engine, and this is calculated from the calculated mass air flow through the engine. For sonic operation, the mass flow through the injectors of the metering valve has a linear dependency on absolute inlet pressure (assuming temperature constant). Thus the different fuel requirements of different size engines may be broadly accommodated by adjusting the metering valve inlet pressure, using the following equation to assure adequate flow capacity exists.

$$P_{(psig)} = K_R \left[ \frac{P_p}{0.3 \ LHV \ \dot{m}_{max}} (70) + 30 \right] \qquad (2)$$

$K_R$ = constant depending on regulator characteristics
$P_p$ = peak engine power [kW]
LHV = lower heating value of fuel [kJ/g]
$\dot{m}_{max}$ = maximum fuel flow capacity at 100 psig [g/s]     This adjustment is achieved by adjustment of the pressure regulator. As mentioned above, an engine's instantaneous fuel flowrates are calculated based on the mass air flow to the engine. The mass air flow (MAF) is calculated as follows:

$$MAF = K.n_{air} \frac{D.RPM.MAP.(1-EGR).\eta_{vol}}{(T_{mix})} \qquad (3)$$

Required fuel flow: $m_{CNG} = MAF/\lambda$     (3a)

Where
K = conversion constant
$n_{air}$ = air portion of intake charge
D = engine displacement (litres)
RPM = engine speed (rev./min.)
MAP = manifold absolute pressure ("Hg)
$\eta_{vol}$ = volumetric efficiency, function of MAP, RPM

$T_{mix}$ = air charge obsolute temperature near intake valve (°K)

$\lambda$ = mass air/fuel ratio

As can be seen above, equation (3) includes the volumetric efficiency ($\eta_{vol}$) as a function of MAP and RPM. One implementation of the control programme for the system includes a universal 208-point volumetric efficiency table (16 RPM cells X 13 MAP cells). An acceptable choice for the points are:

MAP : 29.6, 27.5, 25.6, 23.3, 21.2, 19.2, 17.5, 15.9, 14.5, 13.1, 11.7, 9.9, 7,.4

RPM : I, I(T/I)$^{2/9}$,...I(T/I)$^{8/9}$, T, T(P/T)$^{1/2}$, T(P/T)$^{3/4}$, P, 1.15.P, (1.15)$^2$.P

where:

P = peak power RPM

T = peak torque RPM

I = idle RPM

Volumetric efficiency can be empirically determined on each engine. Alternatively, a mathematical model may be used to develop the volumetric efficiency of each engine. The overall volumetric efficiency is defined as the actual mass of fresh air which passes into an engine cylinder during one intake stroke divided by the ideal air mass ($M_{air}$) which would fill the piston displacement under the same conditions.

for a 4-stroke engine:

$$\eta_{vol} = (2.MAF.60)/D.S.RPM) \qquad (5)$$

a. for engine speeds > peak torque:

$$(RPM,MAP) = \eta\, peak. \left[0.281 + \frac{\mathcal{E} - P_e/P_i}{1.39.(\mathcal{E}-1)}\right]\left[I - R.\left(1 - \frac{RPM}{RPM_{P.T}}\right)^2\right](6)$$

b. for engine speeds ≤ peak torque:

$$(RPM,MAP) = \eta\, peak. \left[0.281 + \frac{\mathcal{E} - P_e/P_i}{1.39.(\mathcal{E}-1)}\right]\left[I - S.\left(1 - \frac{RPM}{RPM_{P.T.}}\right)^2\right](7)$$

with Pressure ratio

$$\frac{P_e}{P_i} = \frac{C}{MAP} \cdot \left[a_0 + a_1.\left(\frac{MAP}{MAP_{max}}\right) + a_2 \cdot \left(\frac{MAP}{MAP_{max}}\right)^2\right] \cdot \left[b_0 + b_1 \cdot \left(\frac{RPM}{RPM_{P.P.}}\right)\right.$$
$$\left. + b_2 \cdot \left(\frac{RPM}{RPM_{P.P.}}\right)^2\right]$$

where

$\eta$peak = estimated peak volumetric efficiency

$\epsilon$ = compression ratio

$RPM_{P.T}$ = engine speed at peak torque (rev./min.)

$R.P.M._{p.p.}$ = engine speed at peak torque (rev./min.)

$$R = \frac{(1-C)}{\left(1 - \frac{RPM_{pp}}{RPM_{pT}}\right)^2}$$

$$C = \frac{\left(\dfrac{4000. \quad .T_p}{D} + FMEP_p\right)}{\left(\dfrac{4000. \quad T_T}{D} + FMEP_T\right)}$$

$$FMEP = \left[c_0 + c_1 \cdot \frac{D.RPM}{z.b^2} + c_2 \cdot \left(\frac{D.RPM}{z.b^2}\right)^2\right]$$

$$S = \frac{(1 - \eta_i)}{\left(1 - \dfrac{RPM_i}{RPM_{pT}}\right)^2}$$

$$\eta_i = \left(1 - \eta_m\right) \cdot \left(\frac{RPM_{pT}}{RPM_i}\right) \cdot \left[1 - 15\left(\frac{1}{RPM_i} - \frac{1}{RPM_{pc}}\right)\right] \cdot \sqrt{\frac{T_c}{T_b}}$$

$a_0, a_1, a_2, b_0, b_1, b_2, c_0, c_1, c_2$ = empirical constants

$RPM_i$ = engine speed at idle (rev./min.)
$\eta m$ = mechnical efficiency
$T_c$ = thermostat opening temperature [K]
$T_b$ = base temperature [K]
z = number of cylinders
b = cylinder bore [mm]

As the estimation of peak volumetric efficiency ($\eta$peak) for each engine is somewhat cumbersome and it has been found that $\eta$peak = .85 is a reasonable approximation for the majority of naturally aspirated spark ignition (S.I.) engines. However, the figure is typically higher when tuned intake or exhaust manifolds are used, or when an engine is turbocharged or supercharged. Appropriate values must be calculated or approximated for these less common configurations.

As noted from equation (3), mass flow determination requires measurement of air temperature near the intake valve ($T_{mix}$). For existing vehicles, the inconvenience of an aftermarket installation of a temperature sensor near the intake valve requires the prediction of the air charge temperature increase from the air temperature sensor location, typically in the air cleaner to the intake valve.

The modelling of the mixture temperature ($T_{mix}$)°K near the intake valve involves calculation using calibrated and measured data:

$$T_{mix} = T_s - (T_s - (T_s - T_{ia})^{\cdot exp}\left\{\frac{K_1 * Z^{0.6} * L}{(RPM_{pp} * D)^{0.4} * (MAF)^{0.2}}\right\} + T_{uni}$$

$$T_{ia} = \frac{1.007(A)\ (LAMBDA)\ (T_{air}) + 2.23(T_{fuel})}{1.007(A)\ (LAMBDA) + 2.23}$$

$$T_{uni} = \frac{K_2 \cdot (RPM_{pp}) \cdot (D)}{MAF} \quad \text{for unisided heads}$$
$$= 0 \quad \text{for crossflow heads or v-type manifolds}$$

$T_{air}$ = air inlet temperature [K]
$T_{fuel}$ = fuel temperature [K]

22

| Z | = # of cylinders |
| L | = intake runner length [m] |
| $RPM_{pp}$ | = engine speed at peak power [RPM] |
| D | = engine displacement [litre] |
| A | = stoichiometric air/fuel ratio |
| LAMBDA | = nominal excess air ratio; for real time metering |
| MAF | = mass air flow [g/s] (calculated using equation (1) with $T_{mix} = T_{air}$) |
| $K_1,K_2$ | = empirically determined constants |

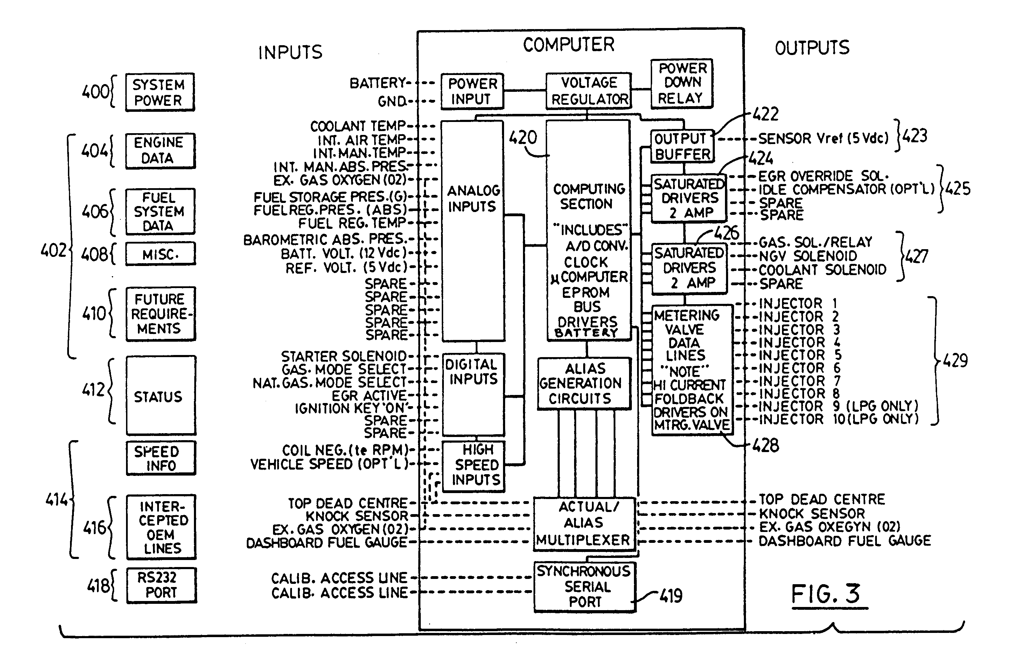

Figure 3 is a block diagram of a suitable computer and sensor set up for controlling the metering valve to provide desired fuel flows, as described above, and illustrates the various sensors which are utilized to determine the settings of the metering valve.

The system power inputs 400 include an input from the battery and a ground line. The analog inputs 402 include engine data 404, fuel system data 406, miscellaneous data 408 and a number of spare lines for future requirements 410. The engine data 404 includes engine coolant temperature, intake air temperature, intake manifold absolute pressure, and exhaust gas oxygen. The fuel system data includes fuel storage pressure (gauge), fuel regulated pressure (absolute) and fuel regulated temperature. The miscellaneous inputs include barometric pressure, battery voltage and a reference voltage (5 volts dc).

The analog inputs are converted to digital signals for processing.

The digital inputs 412 relate primarily to status, and include inputs from the starter solenoid, gasoline mode select, natural gas or propane mode select, the exhaust gas recirculator (EGR), and ignition key.

Inputs 414 relating to engine speed are classified as high speed inputs, and comprise the coil negative, that is the engine R.P.M., and possibly also an input relative to actual vehicle speed. In this particular example, for use in fitting to a conventional gasoline fuelled vehicle a number of high speed inputs may also be obtained by intercepting the original engine manufacturer's (OEMs) data lines 416, such as the top dead centre sensor, the knock sensor and exhaust gas oxygen sensor.

An input may also be provided from the vehicle dashboard fuel gauge.

Calibration inputs 418 are provided for communication with a synchronous serial port 419 for use in calibration of the sensors for detecting top dead centre, knock, exhaust gas oxygen and the dashboard fuel gauge.

The inputs are fed to the computing section 420 which includes an analogue to digital converter (for the analogue inputs), a clock, a microprocessor, an EPROM, bus drivers, and battery (for back-up power).

An output from the computing section 420 passes through an output buffer 422 to provide the reference voltage output 423.

Other outputs from the computing section pass through saturated 1 Amp drivers 424 to an EGR override solenoid and an optional idle compensator outputs 425.

2 Amp drivers 426 are also provided for outputs 427 for control of a gasoline solenoid or relay, for twin-fuelled vehicles, the solenoid in the pressure regulator, and a coolant supply solenoid.

A plurality of metering valve data lines 428 are also provided, one line for each solenoid of the valve. For a typical natural gas application approximately seven or eight outputs 429 will be provided, and on propane or LPG applications nine or ten injectors and outputs may be required. As mentioned above with reference to Figure 5d, due to the heat they produce, the hi-current foldback drivers are located in the metering valve body.

To further compensate for fuelling errors, an active oxygen sensor feedback system and a keep alive adapted memory are included in the control system.

Fuelling errors may be caused by various deviations, including:
- sensor deviation from the respective calibration curve
- inaccuracy of metering valve calibration curve
- deviation of actual vs. calculated volumetric efficiency
- deviation of actual vs. calculated air charge temperature near intake valve deviation of actual vs. calculated fuel demand
- changes in natural gas composition

In order to assist the oxygen sensor in quickly finding stoichiometry, an adaptive memory strategy is provided and structured in a similar manner to the volumetric efficiency table, that is, a table provided with cells, for example 16 RPM cells X 13 MAP cells, each cell holding a value for a volumetric efficiency correction matrix, VC (RPM, MAP).

Initially, the table holds values of VC = 1, and as the vehicle is operated within closed loop within a cell, the particular value of VC (RPM, MAP) is altered until stoichiometry is reached. The table holds the altered values and can thereafter reach stoichiometry more quickly, as the starting value is likely to be closer to the

EP 0 420 599 B1

desired value.

As a further refinement, a series of separate VC (RPM, MAP) factors could be created and stored in the computer's memory, to uniquely compensate for metering errors identified by the closed loop during readily identifiable distinct operating modes such as for EGR active, EGR inactive, air temperature within specific limits, barometric pressure within specific limits, rate of change of engine speed greater than a specific value, MAP value less than minimum standard point by more than a specific value, and the value in the standard matrix.

The above described embodiment has been described with reference to sonic flow through the orifices of the metering valve. It is also possible to operate the system using sub-sonic flow, though this complicates control as the outlet pressure in the metering valve must be taken into account in order to calculate the mass flow rate through each orifice. Sub-sonic flow may be considered in circumstances where the fuel, typically propane, will be operating at or below the critical pressure for the orifice geometry used (that is, the sonic pressure ratio could not predictably be maintained across the orifice). In propane systems this would be most likely to occur at temperatures below -20°C where there was inadequate heat from the engine and/or environment to vaporize the fuel and maintain it at a sufficiently high pressure.

Reference has primarily been made to spark ignition engines, though the system may also have utility in conversion of compression ignition or diesel engines. Typically natural gas will not ignite due to compression at compression ratios below 20:1, such that an ignition using either pilot injected diesel fuel, or a separate spark plug arrangement will be necessary. Nonetheless, the system described herein is viable for such applications.

Further, while the above described embodiments are adapted for use with internal combustion engines, it is of course possible that the system, and the components thereof, could be adapted for use in other applications.

## Claims

1. Apparatus controlling the quantity of fluid flowing into the cylinder of an internal combustion engine in a predetermined time period, the fluid flowing from a common inlet at a first pressure to a common outlet at a lower second pressure comprising:

   (a) at least three fluid conducting lines having a plurality of flow capacities, said lines being connected in parallel between said common inlet and said common outlet such that the total flow from said common inlet to said common outlet is equal to the sum of the separate flows through the individual lines;

   (b) a respective fluid flow control valve disposed in each line;

   (c) sensors for measuring such parameters of the fluid as to enable determination of the mass flow of said measured fluid through the, or each, control valve when open;

   (d) control means adapted to control selectively the opening and closing of the control valves and monitor the sensors to determine the mass flow through each control valve in accordance with the measured fluid parameters, the total fluid flow passing outwardly of said common outlet comprising a base flow component established by the control means operating at least one of the control valves as a bi-stable control valve, whereby the bi-stable control valve or selected ones of the bi-stable control valves is or are opened to provide a continuous predetermined flow, discrete step changes in the base flow component being provided by the control means opening and closing the bi-stable control valve or combinations of the bi-stable control valves, and increments of fluid flow between said discrete steps being provided by the control means operating another of the control valves as a pulsed control valve, which is opened for a fraction of the predetermined time period which is the time between consecutive combustion events, to provide a desired average flow over said time period;

   wherein the control means operates at least two of the control valves as pulsing control valves.

2. An apparatus according to claim 1, wherein the sum of flowrates through the two lines having the lowest flow capacities is greater than the flowrate through the line having the third lowest flow capacity.

3. An apparatus according to claim 2, wherein the flowrate capacities of the two fluid conducting lines having the lowest flow capacities are substantially equal.

4. An apparatus according to claim 1, wherein the two pulsing control valves, which may be opened for a fraction of said predetermined time period, are located in the two fluid conducting lines having the

24

EP 0 420 599 B1

lowest flow capacities.

5. An apparatus according to claim 1, wherein a metering orifice is provided in each of said fluid conducting lines, the pressure difference between the common inlet and the common outlet being maintained at a level sufficient to provide sonic flow through the orifices in each fluid conducting line.

6. An apparatus according to claim 5, wherein the control valves are electrically operated solenoid valves.

7. An apparatus according to claim 6, wherein the sensors detect at least the temperature and pressure of the fluid.

8. An apparatus according to claim 1, wherein the fluid is fuel for the internal combustion engine and the control means is responsive to selected engine parameters to operate the control valves to provide a supply of fuel in accordance with the selected engine parameters.

9. An apparatus according to claim 8, wherein the control means is adapted to determine the required fuel flow of the engine based on various parameters, the required fuel flow being proportional to the volumetric efficiency of the engine as a function of engine manifold absolute pressure and engine speed, the control means including a look-up table containing a plurality of cells corresponding to preselected ranges of engine manifold absolute pressures and engine speeds.

10. An apparatus according to claim 9, wherein the apparatus further comprises a pressurized fuel container and a fuel pressure regulator for supplying fuel from the pressurized fuel container at said first pressure to said common inlet.

11. An apparatus according to claim 10, wherein the metered supply of fuel is mixed with the intake air of the engine, the apparatus further comprising a diffuser cone provided in fluid communication with the common outlet and located in the engine air intake.

12. An apparatus according to claim 1, wherein the flow capacities of the two fluid conducting lines having the highest flow capacities are substantially equal to twice the flow capacity of the next lowest flow capacity fluid conducting line.

13. An apparatus according to claim 1, wherein the flow capacities of the two fluid conducting lines having the highest flow capacities are substantially equal to the sum of the flow capacities of the two next lowest capacity fluid conducting lines, one of said two next lowest capacity fluid conducting lines having a flow capacity twice that of the other fluid conducting line.

14. An apparatus according to claim 1, wherein said flow capacities of said fluid conducting lines are related to one another as to be proportional to respective ones of a plurality of preselected numerical values, said preselected numerical values following the series $2^0$, $2^0$, $2^1$, $2^2$, ...., $2^{n-2}$ and $2^{n-1}$, where there are $n + 1$ fluid conducting lines.

15. An apparatus according to claim 1, wherein said flow capacities of said fluid conducting lines are related to one another as to be proportional to respective ones of a plurality of preselected numerical values, said preselected numerical values following the series $2^0$, $2^0$, $2^1$, $2^2$, ...., $2^{n-2}$ and $2^{n-2}$, where there are $n + 1$ fluid conducting lines.

16. An apparatus according to claim 1, wherein said flow capacities of said fluid conducting lines are related to one another as to be proportional to respective ones of a plurality of preselected numerical values, said preselected numerical values following the series $2^0$, $2^0$, $2^1$, $2^2$, ...., $2^{n-4}$ and $2^{n-3}$, $(2^{n-4} + 2^{n-3})$ and $(2^{n-4} + 2^{n-2})$ where there are $n + 1$ fluid conducting lines.

17. A method for controlling the quantity of fluid flowing into the cylinder of an internal combustion engine in a predetermined time period, the fluid flowing between a common inlet at a first pressure and a common outlet at a lower second pressure through a plurality of parallel fluid conducting lines adapted to provide a plurality of flowrates therethrough and each fluid conducting line being provided with a fluid flow control valve, comprising

25

sensing such parameters of the fluid as to enable determination of the mass flow of said fluid through the, or each, control valve when open;

controlling selectively in dependence upon the determined mass flow the opening and closing of said control valves to control the fluid flow passing outwardly of said common outlet by providing a base flow component established by operating selected control valves as bi-stable control valves and opening the selected control valves to provide a continuous predetermined flow; and

providing discrete step changes in the base flow component by opening and closing combinations of control valves operated as bi-stable control valves,

wherein at least two of said valves are operated as pulsing valves, the remaining valves being operated as bi-stable valves, and wherein the method further comprises:

providing increments of fluid flow between said discrete steps by opening at least one of said pulsing valves for a fraction of the predetermined time period which is the time between consecutive combustion events, to provide a desired average flow over said predetermined time period.

18. A method according to claim 17, wherein the compressible fluid is fuel for supply to an internal combustion engine.

19. A method according to claim 17, wherein the minimum time in a fully open position of said pulsing valve for one predetermined time period is equal to the time taken for the valve to open and the maximum open time of said valve for one predetermined time period is the predetermined time period less the time for the valve to close fully from the fully open position.

20. A method according to claim, 17, further comprising the steps of:

determining the response time of individual control valves to open and close commands;

determining the flow through the lines while the control valves are changing states; and

timing the opening and closing of said control valves to provide said desired discrete step changes in said base flow component.

**Patentansprüche**

1. Vorrichtung zur Regelung der Fluidmenge, die in einem vorbestimmten Zeitraum in den Zylinder einer Verbren nungskraftmaschine strömt, wobei das Fluid aus einem gemeinsamen Einlaß bei einem ersten Druck zu einem gemeinsamen Auslaß bei einem niedrigeren zweiten Druck strömt, umfassend:

(a) zumindest drei Fluid-Leitungsstränge, die eine Anzahl Flußkapazitäten haben, wobei die Stränge zwischen dem gemeinsamen Einlaß und dem gemeinsamen Auslaß parallel geschaltet sind, so daß der Gesamtfluß vom gemeinsamen Einlaß zum gemeinsamen Auslaß gleich der Summe der separaten Flüsse durch die einzelnen Leitungen ist;

(b) ein diesbetreffendes Fluidstrom-Regelventil, das in jeder Leitung angeordnet ist,

(c) Sensoren zum Messen derartiger Fluidparameter, so daß der Massenfluß des gemessenen Fluids durch die oder alle Regelventile, wenn offen, festgelegt werden kann;

(d) Regeleinrichtung, die zum zielgerichteten Regeln des Öffnens und Schließens der Regelventile und zur Überwachung der Sensoren ausgelegt sind, um den Massefluß durch das jeweilige Regelventil entspre chend den gemessenen Fluidparametern zu bestimmen, wobei der Gesamtfluidstrom, der aus dem gemeinsamen Auslaß herauskommt, eine Grundstromkomponente enthält, die eingerichtet wird von der Regeleinrichtung, die zumindest eines der Regelventile als bistabiles Regelventil betreibt, wodurch das oder die ausgewählten bistabilen Regelventile geöffnet werden und ein kontinuierlicher vorbestimmter Fluß bereitgestellt wird; von der Regeleinrichtung,die die bistabilen Regelventile oder Kombinationen der bistabilen Regelventile öffnet und schließt, diskrete Stufenänderungen in der Grundstromkomponente bereitgestellt werden: und von der Regeleinrichtung, die weitere Regelventile als ein Impuls-Fegelventil betreibt, das für einen Bruchteil des vorbestimmten Zeitraums - dies ist die Zeit zwischen zwei aufainanderfolgenden Verbrennungsereignissen - geöffnet ist, die Fluidstromzunahmen zwischen den diskreten Stufen bereitgestellt werden, so daß über den Zeitraum ein gewünschter Durchschnittafluß erfolgt;

wobei die Regeleinrichtung zumindest zwei der Regelvertile als Puls-Regelventile betreibt.

2. Vorrichtung nach Anspruch 1, wobei die Summe der Flußraten durch die zwei Stränge mit den niedrigsten Flußkapazitäten größer ist als die Flußrate durch den Strang mit der drittniedrigsten Flußkapazität.

3. Vorrichtung nach Anspruch 2, wobei die Flußratenkapazitäten der zwei Fluidleitungsstränge mit den niedrigsten Flußkapazitäten im wesentlichen gleich sind.

4. Vorrichtung nach Anspruch 1, wobei die zwei Puls Re gelventile, die für einen Bruchteil des vorbestimmten Zeitraums geöffnet werden können, in den zwei Fluidleitungssträngen mit den niedrigsten Flußkapazitäten angeordnet sind.

5. Vorrichtung nach Anspruch 1, wobei eine Meßblende in jeder der Fluidleitungsstränge angeordnet ist, wobei die Druckdifferenz zwischen dem gemeinsamen Einlaß und dem gemeinsamen Auslaß auf einer Höhe gehalten wird, die ausreicht, um einen schallschnellen Fluß durch die Öffnungen in jedem Fluidleitungsstrang bereitzustellen.

6. Vorrichtung nach Anspruch 5, wobei die Regelventile elektrisch betätigte Magnetventile sind.

7. Vorrichtung nach Anspruch 6, wobei die Sensoren zumindest die Temperatur und den Druck des Fluides aufnehmen.

8. Vorrichtung nach Anspruch 1, wobei das Fluid Brennstoff für eine Verbrennungekraftmaschine ist und die Regelvorrichtung auf ausgewählte Motorparameter reagiert, um die Regelventile zu betreiben und einen Brennstoffnachschub gemäß den gewählten Motorparametern bereitzustellen.

9. Vorrichtung nach Anspruch 8, wobei die Regeleinrichtung ausgelegt ist, den von der Maschine benötigten Brennstoffstrom anhand verschiedener Parameter zu bestimmen, wobei der benötigte Brennstoffstrom proportional ist zum volumetrischen Wirkungsgrad der Maschine und zwar als eine Funktion des Motorverteilers, des absoluten Druckes und der Motorgeschwindigkeit, wobei die Regeleinrichtung eine Tabelle besitzt, die eine Anzahl Felder hat, die den vorgewählten Bereichen des Motorverteilers, der absolute Drucke und der Motorgeschwindigkeit entsprechen.

10. Vorrichtung nach Anspruch 9, wobei die Vorrichtung weiter einen unter Druck stehenden Brennstoffbehälter und einen Brennstoffdruck-Regulator aufweist, geeignet zum Nachschub des Brennstoffs aus dem unter Druck stehenden Brennstoffbehälter beim ersten Druck zum gemeinsamen Einlaß.

11. Vorrichtung nach Anspruch 10, wobei der geregelte Brennstoffnachschub mit der Ansaugluft des Motors gemiocht wird, wobei die Vorrichtung zudem einen Vergaserkonus aufweist, der in Fluidverbindung mit dem gemeinsamen Auslaß steht und im Motorluftsauger angeordnet ist.

12. Vorrichtung nach Anspruch 1, wobei die Flußkapazitäten der zwei Fluidleitungsstränge mit den höchsten Fluß kapazitäten im wesentlichen gleich sind zur doppelten Flußkapazität der nächstniedrigen Fluidleitungsstrang Flußkapazität.

13. Vorrichtung nach Anspruch 1, wobei die Flußkapazitäten der zwei Fluidleitungsstränge mit den höchsten Flußkapazitäten im wesentlichen gleich sind der Summe der Flußkapazitäten der zwei nächsttieferen Fluidleitungssträng-Kapazitäten, wobei eine der zwei nächsttieferen Fluidleitungsstrang-Kapasitäten eine Flußkapazität von zweimal der der anderen Fluidleitungsstränge hat.

14. Vorrichtung nach Anspruch 1, wobei die Flußkapazitäten der Fluidleitungsstränge so zueinander bezogen sind als sie proportional sind zu entsprechend aus einer Anzahl vorgewählter numerischer Werte, wobei die vorgewählten numerischen Werte der Reihe folgen, $2^0$, $2^0$, $2^1$, $2^2$,..., $2^{n-2}$ und $2^{n-1}$ wenn da sind $n + 1$ Fluidleitungsstränge.

15. Vorrichtung nach Anspruch 1, wobei die Flußkapazitäten der Fluidleitungsstränge zueinander bezogen sind als sie proportional sind zu ensprechenden aus einer Anzahl vorgewählter numeriocher Werte, wobei die vorgewählten numerischen Werte der Reihe folgen $2^0$, $2^0$, $2^1$, $2^2$,..., $2^{2-n}$ und $2^{2-n}$, wenn das sind $n + 1$ Fluidleitungsstränge.

16. Vorrichtung nach Anspruch 1, wobei die Flußkapazitäten der Fluidleitungsstränge zueinander bezogen sind als sie proportional sind zur entsprechenden Anzahl vorgewählter numerischer Werte, wobei die vorgewählten numerischen Werte der Reihe folgen $2^0$, $2^0$, $2^1$, $2^2$,..., $2^{n-4}$ und $2^{n-3}$, $(2^{n-4}+2^{n-3})$ und

$(2^{n-4} + 2^{n-2})$, wenn da sind n + 1 Fluidleitungsstränge.

**17.** Verfahren zur Regelung der Fluidmenge, die in einem vorbestimmen Zeitraum in den Zylinder einer Verbrennungskraftmaschine strömt, wobei das Fluid zwischen einem gemeinsamen Einlaß bei einem ersten Druck und einem gemeinsamen Auslaß bei einem niedrigeren zweiten Druck strömt und zwar durch eine Anzahl paralleler Fluidleitungsstränge, ausgelegt, um eine Anzahl Flußraten dort hindurch zur Verfügung zu stellen, und jeder fluidleitungsstrang versehen ist mit einem Fluidfluß-Regelventil, umfassend:

Aufnehmen derartiger Parameter der Fluids, um eine Bestimmung des Fluid-Massenflusses durch die oder die jeweiligen Regelventile, wenn offen, zu ermöglichen;

zielgerichtetes Regeln entsprechend dem bestimmten Massenfluß des Öffnens und Schließens der Regelventile um den Fluidfluß, der aus dem gemeinsamen Auslaß herauskommt, zu regeln, indem eine Grundflußkomponente bereitgestellt wird und zwar errichtet durch das Betreiben ausgewählter Regelventile als bistabile Regelventile und Öffnen der ausgewählten Regelventile, um einen kontinuierlichen vorbestimmten Fluß bereitzustellen; und

Bereitstellen diskreter Stufenänderungen in der Grundflußkomponente durch Öffnen und Schließen Kombinationen von Regelventilen, die als bistabile Regelventile betrieben werden,

wobei zumindest zwei der Ventile als Puloventile betrieben werden, die restlichen Ventile als bistabile Ventile betrieben werden und wobei das Verfahren weiter umfaßt:

Bereitstellen von Fluidflußinkrementen zwischen den diskreten Stufen durch Öffnen mindestens eines der Pulsventile für einen Bruchteil des vorbestimmten Zeitraums, der die Zeit zwischen zwei aufeinanderfolgenden Verbrennungsereignissen ist, um einen gewünschten Durchschnittsfluß über den vorbestimmten Zeitraum bereitzustellen.

**18.** Verfahren nach Anspruch 17, wobei das komprimierbare Fluid ein Brennstoff ist, der an eine Verbrennungskraftmaschine abgegeben wird.

**19.** Verfahren nach Anspruch 17, wobei die Minimalzeit in vollgeöffneter Position des Pulsventils für einen vorbestimmten Zeiraum gleich der Zeit ist, die das Ventil zum Öffnen braucht, und die Maximal-Öffnungszeit des Ventils für einen vorbestimmten Zeitraum der vorbestimmte Zeitraum ist, abzüglich der Zeit für das Ventil, um aus der vollgeöffneten Stellung ganz zu schließen.

**20.** Verfahren nach Anspruch 17, das zudem die Schnitte umfaßt:
Bestimmen der Antwortzeit der einzelnen Regelventile auf Öffnungs- und Sehließbefehle;
Bestimmen des Flusses durch die Leitungen, wobei die Regelventile ihre Zustände ändern; und
Bestimmen der Zeitfolge des Öffnens und Schließens der Regelventile, um die gewünschten diskreten Stufenänderungen in der Grundflußkomponente bereitzustellen.

**Revendications**

**1.** Appareil de réglage de la quantité de fluide qui circule vers le cylindre d'un moteur à combustion interne pendant une période prédéterminée, le fluide circulant d'une entrée commune à une première pression à une sortie commune à une seconde pression plus faible, comprenant :
(a) au moins trois conduites de fluide ayant plusieurs débits nominaux, les conduites étant raccordées en parallèle entre l'entrée commune et la sortie commune afin que le débit total de l'entrée commune à la sortie commune soit égal à la somme des débits séparés dans les conduites individuelles,
(b) une soupape respective de commande de débit de fluide placée dans chaque conduite,
(c) des capteurs destinés à mesurer les paramètres du fluide qui permettent la détermination du débit massique du fluide mesuré dans la soupape ou chaque soupape de commande lorsqu'elle est ouverte,
(d) un dispositif de commande destiné à régler sélectivement l'ouverture et la fermeture des soupapes de commande et à contrôler les capteurs pour déterminer le débit massique dans chaque soupape de commande d'après les paramètres mesurés du fluide, le débit total de fluide circulant vers l'extérieur de la sortie commune comprenant une composante de débit de base établie par le dispositif de commande qui commande l'une au moins des soupapes de commande sous forme d'une soupape de commande bistable, si bien que la soupape de commande bistable ou des soupapes choisies parmi les soupapes de commande bistable sont ouvertes pour la formation d'un débit continu prédéterminé, des changements distincts par paliers de la composante du débit de base étant donnés par le dispositif de commande qui ouvre et ferme la soupape de commande bistable ou des combinaisons de soupapes de commande bistable, les variations élémentaires de débit de fluide entre les paliers séparés étant déterminées par le dispositif de commande qui commande une autre des soupapes de commande sous forme d'une soupape de commande à impulsions qui est ouverte pendant une fraction de la période prédéterminée qui représente le temps compris entre des événements consécutifs de combustion afin qu'un débit moyen voulu soit obtenu pendant ladite période, et

le dispositif de commande assure la commande de deux des soupapes de commande au moins sous forme de soupapes de commande à impulsions.

2. Appareil selon la revendication 1, dans lequel la somme des débits dans les deux conduites ayant les plus faibles débits nominaux est supérieure au débit dans la conduite ayant le troisième débit nominal le plus faible.

3. Appareil selon la revendication 2, dans lequel les débits nominaux des deux conduites de fluide ayant les plus faibles débits nominaux sont pratiquement égaux.

4. Appareil selon la revendication 1, dans lequel les deux soupapes de commande à impulsions, qui peuvent être ouvertes pendant une fraction de ladite période prédéterminée, sont placées dans les deux conduites de fluide ayant les plus faibles débits nominaux.

5. Appareil selon la revendication 1, dans lequel un orifice de dosage est placé dans chacune des conduites de fluide, la différence de pression entre l'entrée commune et la sortie commune étant maintenue à un niveau suffisant pour assurer un écoulement sonique par les orifices de chaque conduite de fluide.

6. Appareil selon la revendication 5, dans lequel les soupapes de commande sont des électrovannes commandées électriquement.

7. Appareil selon la revendication 6, dans lequel les capteurs détectent au moins la température et la pression du fluide.

8. Appareil selon la revendication 1, dans lequel le fluide est un carburant de moteur à combustion interne, et le dispositif de commande est commandé par des paramètres choisis du moteur afin qu'il commande les soupapes de commande et assure l'alimentation en carburant en fonction des paramètres choisis du moteur.

9. Appareil selon la revendication 8, dans lequel le dispositif de commande est destiné à déterminer le débit nécessaire de carburant du moteur d'après divers paramètres, le débit nécessaire de carburant étant proportionnel au rendement volumétrique du moteur en fonction de la vitesse du moteur et de la pression absolue au collecteur d'admission du moteur, le dispositif de commande comprenant une table de consultation qui comporte plusieurs cellules correspondant aux plages préalablement choisies de vitesse du moteur et de pression absolue au collecteur d'admission du moteur.

10. Appareil selon la revendication 9, dans lequel l'appareil comporte en outre un récipient sous pression de carburant et un régulateur de pression de carburant destiné à transmettre le carburant du récipient sous pression de carburant à la première pression à l'entrée commune.

11. Appareil selon la revendication 10, dans lequel la quantité dosée de carburant qui est transmise est mélangée à l'air d'admission du moteur, l'appareil comportant en outre un cône diffuseur communiquant avec la sortie commune et placé à l'admission d'air du moteur.

12. Appareil selon la revendication 11, dans lequel les débits nominaux dans les deux conduites de fluide ayant les plus grands débits nominaux sont pratiquement égaux au double du débit nominal de la conduite de fluide de débit nominal inférieur suivant.

**13.** Appareil selon la revendication 1, dans lequel les débits nominaux des deux conduites de fluide ayant les plus grands débits nominaux sont pratiquement égaux à la somme des débits nominaux des deux conduites ayant les deux débits nominaux inférieurs suivants, l'une des deux conduites de fluide qui ont des débits nominaux inférieurs suivants ayant un débit nominal qui est égal au double de celui de l'autre conduite de fluide.

**14.** Appareil selon la revendication 1, dans lequel les débits nominaux des conduites de fluide sont liés afin qu'ils soient proportionnels à des valeurs respectives choisies parmi plusieurs valeurs numériques prédéterminées, ces valeurs numériques prédéterminées correspondant à la série $2^0$, $2^0$, $2^1$, $2^2$, ..., $2^{n-2}$ et $2^{n-1}$, lorsqu'il existe n + 1 conduites de fluide.

**15.** Appareil selon la revendication 1, dans lequel les débits nominaux des conduites de fluide sont liés afin qu'ils soient proportionnels à des valeurs numériques respectives choisies parmi plusieurs valeurs numériques prédéterminées, les valeurs numériques prédéterminées correspondant à la série $2^0$, $2^0$, $2^1$, $2^2$, ..., $2^{n-2}$ et $2^{n-2}$, lorsqu'il existe n + 1 conduites de fluide.

**16.** Appareil selon la revendication 1, dans lequel les débits nominaux des conduites de fluide sont liés afin qu'ils soient proportionnels à des valeurs numériques respectives choisies parmi plusieurs valeurs numériques prédéterminées, les valeurs numériques prédéterminées correspondant à la série $2^0$, $2^0$, $2^1$, $2^2$, ..., $2^{n-4}$ et $2^{n-3}$, $(2^{n-4} + 2^{n-3})$ et $(2^{n-4} + 2^{n-2})$, lorsqu'il existe n + 1 conduites de fluide.

**17.** Procédé de réglage de la quantité de fluide s'écoulant dans le cylindre d'un moteur à combustion interne pendant une période prédéterminée, le fluide s'écoulant entre une entrée commune à une première pression et une sortie commune à une seconde pression plus faible, par l'intermédiaire de plusieurs conduites parallèles de fluide destinées à donner plusieurs débits, chaque conduite de fluide ayant une soupape de commande de débit de fluide, comprenant :

la détection de paramètres du fluide permettant la détermination du débit massique du fluide dans la soupape ou chaque soupape de commande qui est ouverte,

la commande sélective, en fonction du débit massique prédéterminé, de l'ouverture et de la fermeture des soupapes de commande afin que le débit de fluide sortant par la sortie commune soit réglé par utilisation d'une composante de débit de base établie par commande de soupapes choisies de commande sous forme de soupapes de commande bistable, et par ouverture des soupapes de commande choisies afin qu'elles donnent un débit continu prédéterminé, et

la réalisation de changements, par paliers séparés, de la composante de débit de base par ouverture et fermeture de combinaisons de soupapes de commande qui sont commandées comme des soupapes de commande bistable,

deux au moins des soupapes étant commandées sous forme de soupapes à impulsions, les soupapes restantes étant commandées comme soupapes bistables, et le procédé comporte en outre :

la détermination de variations élémentaires de débits de fluide entre les paliers séparés par ouverture de l'une au moins des soupapes à impulsions pendant une fraction de la période prédéterminée qui est le temps compris entre des événements consécutifs de combustion, afin qu'un débit moyen voulu soit obtenu sur la période prédéterminée.

**18.** Procédé selon la revendication 17, dans lequel le fluide compressible est un carburant destiné à l'alimentation d'un moteur à combustion interne.

**19.** Procédé selon la revendication 17, dans lequel le temps minimal en position d'ouverture totale de la soupape à impulsions, pendant une période prédéterminée, est égal au temps nécessaire à l'ouverture de la soupape, et le temps maximal d'ouverture de la soupape pendant une période prédéterminée est égal à la période prédéterminée réduite du temps nécessaire à la fermeture totale de la soupape depuis la position d'ouverture totale.

**20.** Procédé selon la revendication 17, comprenant en outre les étapes suivantes :

la détermination du temps de réponse des soupapes individuelles de commande à des commandes d'ouverture et de fermeture,

la détermination du débit dans les conduites lorsque les soupapes de commande changent d'état, et

la synchronisation de l'ouverture et de la fermeture des soupapes de commande pour l'obtention des changements par paliers séparés voulus de la composante de débit de base.

FIG. 1

INPUTS

REGULATOR

OUTPUTS

14

| SENSOR POWER SUPPLY |

| FUEL STORAGE SUPPLY |

Vref (5 Vdc)

15

HIGH PRESSURE NGV → | FILTER | → 26

12

FUEL STORAGE PRESSURE SENSOR — 30 — FUEL STORAGE PRESSURE SIGNAL

| COMPUTER CONTROLS |

NGV SOLENOID CONTROL — — | HIGH PRESSURE NGV SOLENOID | — 28

| HEAT SOURCE |

34

ENGINE COOLANT

| INSTALLER ADJUSTMENT |

PRESSURE ADJUSTING SCREW

| ADJUSTABLE PRESSURE REGULATOR |

15

36 | RELIEF VALVE | RELIEF OUTLET

REGULATED PRESSURE NGV

15

25

32

FIG. 2

FIG. 3

EP 0 420 599 B1

FIG. 4

EP 0 420 599 B1

FIG. 5a

FIG. 5b

FIG. 5c

FIG. 5d

FIG. 6

FIG. 7a

FIG. 7b

464

462

17

454

450

456    460

**FIG. 7c**

17

314    336    312

338

466

348    **FIG. 7d**    350

FIG. 8

FIG. 9